# EUROPEAN PATENT APPLICATION

(11) **EP 4 732 996 A2**
(43) Date of publication of application: **29.04.2026**
(21) Application number: 26164770.5
(22) Date of filing: 10.10.2017
(51) Int. Cl.: B24D 18/00

(54) **BONDED ABRASIVE ARTICLES INCLUDING ORIENTED ABRASIVE PARTICLES**

(30) Priority: 25.10.2016 US 201662412366 P; 25.08.2017 US 201762550126 P
(62) Divisional of application: 17863607.2
(71) Applicant: 3M Innovative Properties Company, St. Paul, MN 55133-3427 (US)
(72) Inventor: ADEFRIS, Negus B., Saint Paul, 55133-3427 (US); FRANKE, Carsten, Saint Paul, 55104 (US); SMITHSON, Robert L.W., Saint Paul, 55133-3427 (US); GOERS, Brian D., Saint Paul, 55133-3427 (US); CASTILLO, Maria Celeste, Merced, 95340 (US); GIVOT, Maiken, Saint Paul, 55133-3427 (US)
(74) Representative: Mathys & Squire

(57) **Abstract**

The present disclosure provides bonded abrasive articles including abrasive particles retained in a binder. The abrasive particles are oriented at a predetermined angle greater than 0 degrees and less than 90 degrees with respect to a longitudinal axis of the bonded abrasive article. Fifty percent or more of the abrasive particles are oriented within 15 degrees above or below the angle, as measured using microscopy image analysis under magnification.

## Description

### Technical Field

The present disclosure broadly relates to bonded abrasive articles and methods of making abrasive articles having abrasive particles in a metallic, vitreous, or resin bonding matrix.

### Background

Traditionally, vitrified bond abrasive articles (e.g., abrasive wheels, abrasive segments, and whetstones) are made by compressing a blend of abrasive particles (e.g., diamond, cubic boron nitride, alumina, or SiC), a vitreous bond precursor (e.g., glass frit, ceramic precursor) an optional pore inducer (e.g., glass bubbles, naphthalene, crushed coconut or walnut shells, or acrylic glass or PMMA), and a temporary resin bond in a liquid vehicle (e.g., aqueous solutions of phenolic resin, polyvinyl alcohol, urea-formaldehyde resin, or dextrin). The abrasive particles, vitreous bond precursor, anftwi d usually the pore inducer are typically dry blended together. The temporary resin bond solution is then added to wet out the grain mix. The blended mix is then placed in a hardened steel mold treated with a mold release. The filled mold is then compressed in a press to form a molded green body. The green body then is ejected from the mold, and subsequently heated until the temporary resin bond is burned out and the vitreous bond precursor is converted into a vitreous bond matrix (also referred to in the art as "vitreous bond" and "vitreous binder".

Traditionally, metal bond abrasive articles are made by mixing an abrasive grit, such as diamond, cubic boron nitride (cBN), or other abrasive grains with a non-melting metal powder (e.g., tungsten, stainless steel, or others), a melting metal powder (e.g., bronze or copper), or a combination thereof. Pore inducers, temporary binders and other additives may be added. The mixture is then introduced into a mold that has been coated with a mold release agent. The filled mold is then compressed in a press to form a molded green body. The green body then is ejected from the mold and subsequently heated in a furnace at high temperature to melt a portion of the metal composition, or it is infused with a molten metal. The heating is typically done in a suitable controlled atmosphere of inert or reducing gas (e.g., nitrogen, argon, hydrogen) or in a vacuum.

There are many disadvantages to these manufacturing approaches: each abrasive article shape requires a special mold; the molds typically are expensive and have a long lead time to make; any design change requires the manufacture of a new mold; the abrasive grains are randomly oriented in the abrasive article; there are limitations to the shapes that can be molded, complicated shapes with undercuts or internal structures such as cooling channels are generally not possible; molds wear out and have a limited number of units that can be manufactured per mold; while the molds are filled with the abrasive mixture, separation of the components can occur, leading to inhomogeneous abrasive components and density variation, which is easily visible and may cause performance variations. Moreover, the processes are often manual and labor intensive.

### Summary

**In** a first aspect, the present disclosure provides a bonded abrasive article. The bonded abrasive article includes abrasive particles retained in a binder, wherein the abrasive particles are oriented at a predetermined angle greater than 0 degrees and less than 90 degrees with respect to a longitudinal axis of the bonded abrasive article. Fifty percent or more of the abrasive particles are oriented within 15 degrees above or below the angle, as measured using microscopy image analysis at 10 to 1,000 times magnification.

**In** a second aspect, the present disclosure provides another bonded abrasive article. The bonded abrasive article includes a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article. A second portion of the plurality of abrasive particles are oriented at a predetermined second angle that is different from the first angle. Fifty percent or more of the abrasive particles of each of the first portion and the second portion are oriented within 15 degrees above or below the first angle and the second angle, respectively, as measured using microscopy image analysis at 10 to 1,000 times magnification.

In a third aspect, the present disclosure provides a method of making a bonded abrasive article, the method comprising sequential steps. Step a) includes a subprocess including sequentially: i) depositing a layer of loose powder particles in a confined region, wherein the loose powder particles comprise matrix particles and abrasive particles; ii) spreading the layer of loose powder particles with a spreading bar or roller to provide a substantially uniform thickness, wherein a gap between the spreading bar or roller and a base plane of the confined region is selected to be shorter than an average length of the abrasive particles; and iii) selectively treating an area of the layer of loose powder particles to bond powder particles together. Step b) includes independently carrying out step a) a plurality of times to generate a bonded abrasive article preform comprising the bonded powder particles and remaining loose powder particles. In each step a), the loose powder particles are independently selected. Step c) includes separating substantially all of the remaining loose powder particles from the abrasive article preform. Step d) includes heating the bonded abrasive article preform to provide the bonded abrasive article comprising the abrasive particles retained in a matrix material.

In a fourth aspect, a non-transitory machine readable medium is provided. The non-transitory machine readable medium has data representing a three-dimensional model of a bonded abrasive article, when accessed by one or more processors interfacing with a 3D printer, causes the 3D printer to create a bonded abrasive article preform of the bonded abrasive article. The bonded abrasive article preform includes abrasive particles retained in a binder. The abrasive particles either a) are oriented at a predetermined angle greater than 0 degrees and less than 90 degrees with respect to a longitudinal axis of the bonded abrasive article preform, wherein 50% or more of the abrasive particles are oriented within 15 degrees above or below the angle; or b) a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively. In either a) or b) the angle is as measured using microscopy image analysis at 10 to 1,000 times magnification.

In a fifth aspect, a method is provided. The method includes retrieving, from a non-transitory machine readable medium, data representing a 3D model of a bonded abrasive article; executing, by one or more processors, a 3D printing application interfacing with a manufacturing device using the data; and generating, by the manufacturing device, a physical object of a bonded abrasive article preform of the bonded abrasive article. The bonded abrasive article preform includes abrasive particles retained in a binder. The abrasive particles either a) are oriented at a predetermined angle greater than 0 degrees and less than 90 degrees with respect to a longitudinal axis of the bonded abrasive article preform, wherein 50% or more of the abrasive particles are oriented within 15 degrees above or below the angle; or b) a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively. In either a) or b) the angle is as measured using microscopy image analysis at 10 to 1,000 times magnification.

In a sixth aspect, another method is provided. The method includes receiving, by a manufacturing device having one or more processors, a digital object comprising data specifying a plurality of layers of a bonded abrasive article; and generating, with the manufacturing device by an additive manufacturing process, a bonded abrasive article preform of the bonded abrasive article based on the digital object. The bonded abrasive article preform includes abrasive particles retained in a binder. The abrasive particles either a) are oriented at a predetermined angle greater than 0 degrees and less than 90 degrees with respect to a longitudinal axis of the bonded abrasive article preform, wherein 50% or more of the abrasive particles are oriented within 15 degrees above or below the angle; or b) a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively. In either a) or b) the angle is as measured using microscopy image analysis at 10 to 1,000 times magnification.

In a seventh aspect, a system is provided. The system includes a display that displays a 3D model of a bonded abrasive article; and one or more processors that, in response to the 3D model selected by a user, cause a 3D printer to create a physical object of a bonded abrasive article preform of the bonded abrasive article. The bonded abrasive article preform includes abrasive particles retained in a binder. The abrasive particles either a) are oriented at a predetermined angle greater than 0 degrees and less than 90 degrees with respect to a longitudinal axis of the bonded abrasive article preform, wherein 50% or more of the abrasive particles are oriented within 15 degrees above or below the angle; or b) a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively. In either a) or b) the angle is as measured using microscopy image analysis at 10 to 1,000 times magnification.

Features and advantages of the present disclosure will be further understood upon consideration of the detailed description as well as the appended claims.

### Brief Description of Drawings

FIG. 1 is a schematic diagram of a method of molding a bonded abrasive article according to the prior art.
FIG. 2A is a schematic process flow diagram of a method of making a bonded abrasive article according to the present disclosure.
FIG. 2B is a schematic cross-sectional side view of the third step of the process of FIG. 2A with a thermal print head heat source.
FIG. 2C is a schematic cross-sectional side view of the third step of the process of FIG. 2A with a heated tip heat source.
FIG. 2D is a schematic cross-sectional side view of the third step of the process of FIG. 2A with a laser heat source.
FIG. 3 is a schematic cross-sectional side view of a spreading roller pushing abrasive particles into a substantially horizontal orientation.
FIG. 4A is a schematic cross-sectional side view of a portion of a bonded abrasive article including two layers of abrasive particles, preparable according to the present disclosure.
FIG. 4B is an optical microscope image of a bonded abrasive article prepared according to the present disclosure.
FIG. 4C is a schematic cross-sectional side view of a confined region of powder with a modified movable piston and hinged plate for tilting the powder bed.
FIG. 5A is a schematic cross-sectional side view of a bonded abrasive article, preparable according to the present disclosure.
FIG. 5B is an optical microscope image of a bonded abrasive article prepared according to the present disclosure, the image being of a portion of an upper (axial) surface of the article as indicated by the arrow of FIG. 5A.
FIG. 5C is a schematic cross-sectional side view of the bonded abrasive article of FIG. 5A.
FIG. 5D is an optical microscope image of a bonded abrasive article prepared according to the present disclosure, the image being of a portion of a side (radial) surface of the article as indicated by the arrow of FIG. 5C.
FIG. 6A is a schematic cross-sectional side view of a bonded abrasive article, preparable according to the present disclosure.
FIG. 6B is an optical microscope image of a bonded abrasive article prepared according to the present disclosure, the image being of a portion of a side (radial) surface of the article.
FIG. 6C is an optical microscope image of the bonded abrasive article of FIG. 6B at a lower magnification.
FIG. 7A is a schematic cross-sectional side view of a bonded abrasive article, preparable according to the present disclosure.
FIG. 7B is an optical microscope image of a bonded abrasive article prepared according to the present disclosure, the image being of a portion of an upper (axial) surface of the article as indicated by the arrow of FIG. 7A.
FIG. 7C is a schematic cross-sectional side view of the bonded abrasive article of FIG. 7A.
FIG. 7D is an optical microscope image of a bonded abrasive article prepared according to the present disclosure, the image being of a portion of a side (radial) surface of the article as indicated by the arrow of FIG. 7C.
FIG. 8 is a graph of total weight of material moved versus time during abrasion for bonded abrasive articles of Example 1.
FIG. 9 is a schematic cross-sectional top view of an exemplary vitreous bond or metal bond abrasive wheel 900, preparable according to the present disclosure.
FIG. 10 is a schematic cross-sectional top view of an exemplary vitreous bond or metal bond abrasive wheel 1000, preparable according to the present disclosure.
FIG. 11 is a schematic perspective view of an exemplary vitreous bond or metal bond abrasive segment 1100, preparable according to the present disclosure.
FIG. 12 is a schematic perspective view of a vitreous bond or metal bond abrasive wheel 1200, preparable according to the present disclosure.
FIG. 13 is a schematic perspective view of rotary abrasive tool 1300, preparable according to the present disclosure.
FIG. 14 is a schematic perspective view of an exemplary dental bur 1400, preparable according to the present disclosure.
FIG. 15 is a block diagram of a generalized system 1500 for additive manufacturing of an article.
FIG. 16 is a block diagram of a generalized manufacturing process for an article preform.
FIG. 17 is a high-level flow chart of an exemplary article manufacturing process.
FIG. 18 is a high-level flow chart of an exemplary article additive manufacturing process.
FIG. 19 is a schematic front view of an exemplary computing device 1900.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

### Detailed Description

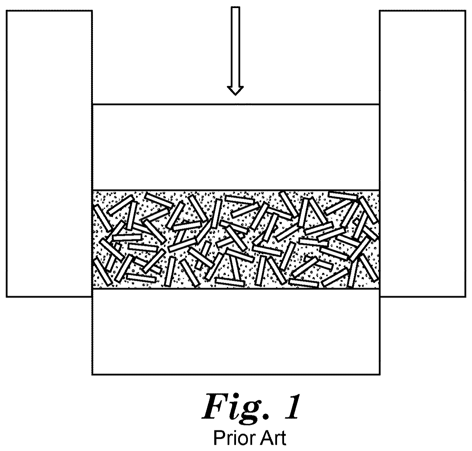

Recent work has identified that platelet shaped crushed abrasive particles (e.g., US 4,848,041 to Kruschke) or precision shaped abrasive particles (e.g., US 8,142,531 to Adefris et al.) may offer high grinding performance in coated disc or belt articles. The performance in bonded abrasive appears to be mixed in various tests, however, as the orientation when making these articles is random. In bonded articles containing platelet shaped abrasive particles one can find several grains oriented on the flat side, leading to a wear that may prevent abrasion from taking place. For instance, when making a bonded abrasive article with such platelet shaped abrasive particles they are generally mixed with the bond matrix and molded in a cavity. Generally, after pressing, as shown in Figure 1, the particles tend to pack in a random way leading to the contact surface having some particles on the flat side if they are platelet shaped.

It has now been discovered that a bonded abrasive article can be prepared including abrasive particles and bond material, in which the abrasive particles are preferentially oriented so the bonded abrasive article has effective performance in a chosen orientation. Such a structure may be formed using additive manufacturing methods.

In a first aspect, the present disclosure provides a bonded abrasive article. The bonded abrasive article includes abrasive particles retained in a binder, wherein the abrasive particles are oriented at a predetermined angle greater than 0 degrees and less than 90 degrees with respect to a longitudinal axis of the bonded abrasive article. Fifty percent or more of the abrasive particles are oriented within 15 degrees above or below the angle, as measured using microscopy image analysis at 10 to 1,000 times magnification.

In a second aspect, the present disclosure provides a bonded abrasive article including a plurality of abrasive particles retained in a binder. A first portion of the plurality of abrasive particles are oriented at a predetermined first angle greater than 0 degrees and less than 90 degrees with respect to a longitudinal axis of the bonded abrasive article and a second portion of the plurality of abrasive particles are oriented at a predetermined second angle that is different from the first angle. Fifty percent or more of the abrasive particles of each of the first portion and the second portion are oriented within 15 degrees above or below the first angle and the second angle, respectively, as measured using microscopy image analysis at 10 to 1,000 times magnification. In certain embodiments, the bonded abrasive article further includes a third portion of the plurality of abrasive particles oriented at a predetermined third angle that is different from the first angle and the second angle. Fifty percent or more of the abrasive particles of the third portion are oriented within 15 degrees above or below the third angle.

The predetermined angle of orientation of the abrasive particles is selected from the range of 1 degree to 89 degrees with respect to a longitudinal axis of the bonded abrasive article. In some embodiments, the angle is 2 degrees or greater, 5 degrees or greater, 10 degrees or greater, 15 degrees or greater, 20 degrees or greater, 25 degrees or greater, 30 degrees or greater, 40 degrees or greater, or 45 degrees; and 89 degrees or less, 85 degrees or less, 80 degrees or less, 75 degrees or less, 70 degrees or less, 65 degrees or less, 60 degrees or less, 55 degrees or less, or 50 degrees or less. For instance, in an embodiment according to the second aspect, the first angle may be 45 degrees and the second angle may be 60 degrees. In other embodiments, the difference between the first angle and the second angle may be less than 5 degrees. Suitable imaging methods for determining the angles include optical microscopy and scanning electron microscopy (SEM).

Methods of making vitreous bond abrasive articles, metal bond abrasive articles, and resin bond abrasive articles according to the present disclosure include a common additive subprocess. The subprocess comprises sequentially, preferably consecutively (although not required), carrying out at least three steps. Advantageously, the methods involve selectively treating an area of the loose powder particles to bond powder particles together. More particularly, in a third aspect, the present disclosure provides a method of making a bonded abrasive article, the method comprising sequential steps. Step a) includes a subprocess including sequentially: i) depositing a layer of loose powder particles in a confined region, wherein the loose powder particles comprise matrix particles and abrasive particles; ii) spreading the layer of loose powder particles with a spreading bar or roller to provide a substantially uniform thickness, wherein a gap between the spreading bar or roller and a base plane of the confined region is selected to be shorter than an average length of the abrasive particles; and iii) selectively treating an area of the layer of loose powder particles to bond powder particles together. Step b) includes independently carrying out step a) a plurality of times to generate a bonded abrasive article preform comprising the bonded powder particles and remaining loose powder particles. In each step a), the loose powder particles are independently selected. Step c) includes separating substantially all of the remaining loose powder particles from the abrasive article preform. Step d) includes heating the bonded abrasive article preform to provide the bonded abrasive article comprising the abrasive particles retained in a matrix material.

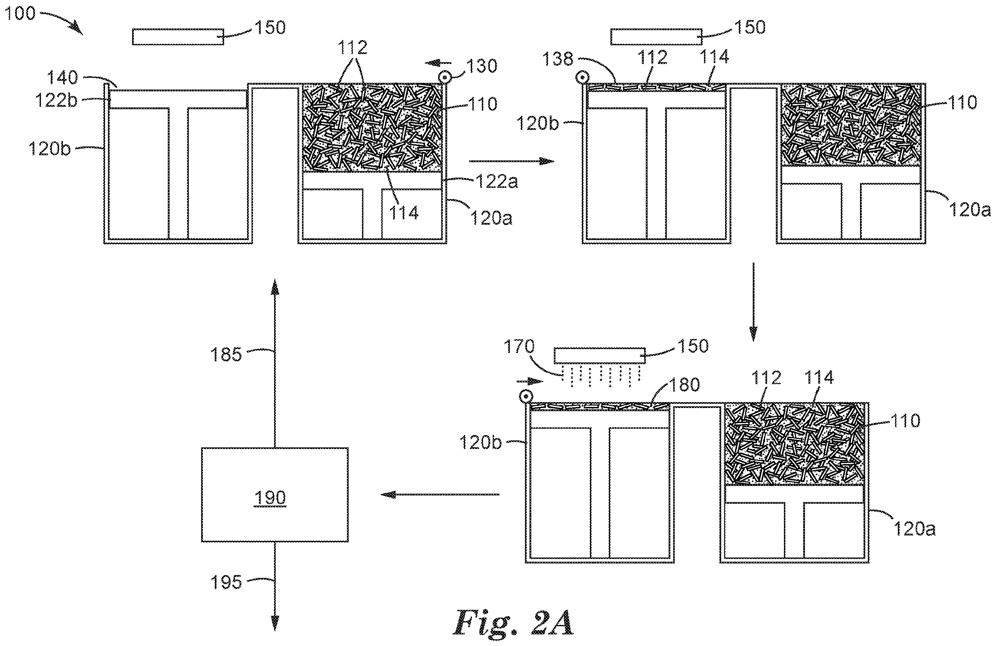

FIG. 2A schematically depicts an exemplary powder bed process 100 used in making a bonded abrasive article. In the first step, a layer 138 of loose powder particles 110 from powder chamber 120a with movable piston 122a is deposited in a confined region 140 in powder chamber 120b with movable piston 122b. In certain embodiments, a layer of loose particles may be supplied to the confined region from a hopper, an auger, a trough, a sifter, or another suitable powder handling mechanism.

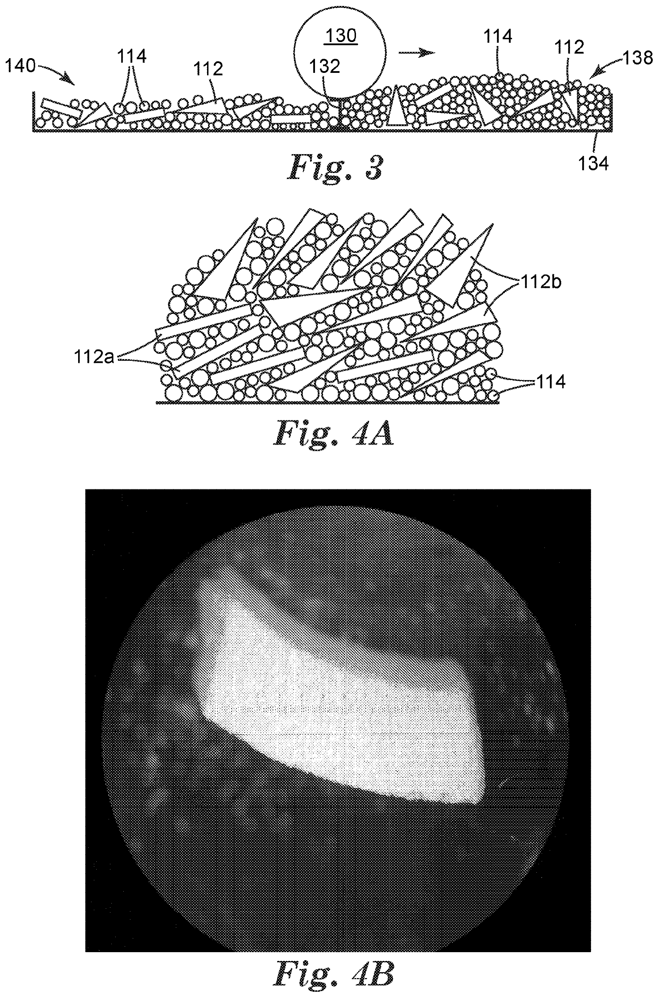

As noted above, the layer of loose powder particles is spread using a spreading bar or roller to provide a substantially uniform thickness. Importantly, wherein a gap between the spreading bar or roller and a base plane of the confined region is selected to be shorter than an average length of the abrasive particles. The "base plane" is the planar surface of the confined region upon which a first layer of loose powder particles is disposed, or the upper surface of the prior layer when a second or subsequent layer of loose powder particles is disposed on the layer added immediately prior to the second or subsequent layer of loose powder particles. Referring to FIG. 3, a schematic cross-sectional side view is provided of a spreading roller 130 pushing abrasive particles 112 (mixed with the matrix particles 114) into a substantially horizontal orientation. The use of a gap 132 between the base plane 134 of the confined region 140 and (e.g., a lower surface of) the spreading bar or roller 130 that is about the average length of the abrasive particles 112 allows for the spreading roller 130 to push or otherwise force the abrasive particles 112 into a generally horizontal orientation (with respect to the base plane 134 of the confined region 140).

As depicted in FIG. 3, the abrasive particles 112 in the portion of the layer 138 that has been contacted by the spreading roller 130 are disposed in an approximately horizontal orientation. In practice, the exact orientation of each abrasive particle 112 will likely vary as opposed to being perfectly parallel with the base plane 134 of the confined region 140. Hence, the orientation angle of 50% or more, 60% or more, 70% or more, 75% or more, 80% or more, 85% or more, or 90% or more of the abrasive particles can vary by plus or minus 15 degrees, plus or minus 10 degrees, or plus or minus 5 degrees. The abrasive particles 112 in the portion of the layer 138 that has not yet been contacted by the spreading roller 130, which moves in the direction of the arrow shown in FIG. 3, in contrast, are randomly oriented amongst the matrix particles 114 in the layer 138. In certain embodiments, including the embodiment shown in FIG. 3, the loose powder of the layer 138 can be compressed by the spreading roller 130; with a smaller thickness than the portion of the layer 138 that has not yet been spread.

Referring to both FIG. 2A and FIG. 3, the layer 138 should be of substantially uniform thickness. For example, the thickness of the layer may vary less than 50 microns, preferably less than 30 microns, and more preferably less than 10 microns. The layer thickness can range from slightly larger than the length of the smallest particle up to 5 millimeters, as long as treatment can bind all the loose powder where it is selectively applied. Preferably, the thickness of the layer is from about 10 microns to about 500 microns, 10 microns to about 250 microns, more preferably about 50 microns to about 250 microns, and more preferably from about 100 microns to about 200 microns.

In certain embodiments, the length of the gap between the spreading bar or roller and the base plane of the confined region is approximately the same as the length dimension of abrasive particle. Stated another way, typically a ratio of the length of the gap between the spreading bar or roller and the base plane of the confined region and the average length of the abrasive particle may range from 2 : 1 to 0.5 : 1, inclusive, and smaller, while still keeping the gap larger than the smallest dimension (i.e., thickness) of the abrasive particle. In some embodiments, a ratio of the length of the gap between the spreading bar or roller and the base plane of the confined region and the average length of the matrix particle is 0.1 : 1 or greater, 5 : 1 or greater, or 10 : 1 or greater. Within the variety of abrasive particle shapes, the variety of matrix particle shapes, and the interactions between the loose powder particles during spreading of the layer of loose powder particles, these ratios can be adjusted to accomplish the objective of orienting (or substantially orienting) the abrasive particles.

Referring now to FIG. 4A, a schematic cross-sectional side view of a portion of a bonded abrasive article preparable according to the present disclosure is provided, including two layers of abrasive particles. A first portion of the plurality of abrasive particles 112a are oriented at a predetermined first angle greater than 0 degrees and less than 90 degrees with respect to a longitudinal axis of the bonded abrasive article and a second portion of the plurality of abrasive particles 112b are oriented at a predetermined second angle that is different from the first angle. Fifty percent or more of the abrasive particles of each of the first portion and the second portion are oriented within 15 degrees above or below the first angle and the second angle, respectively, as measured using microscopy image analysis at 10 to 1,000 times magnification. In certain embodiments, the bonded abrasive article further includes a third portion of the plurality of abrasive particles oriented at a predetermined third angle that is different from the first angle and the second angle. Fifty percent or more of the abrasive particles of the third portion are oriented within 15 degrees above or below the third angle. One method of providing a second angle is to change the gap between the spreading bar or roller and a base plane of the confined region after one sequential spreading step before a subsequent sequential spreading step. Another method is to tilt the confined region after one sequential selective treatment step before a subsequent sequential treatment step. Referring to FIG. 4B, an optical microscope image at 1.6x magnification is provided of a bonded abrasive article prepared according to the present disclosure. The ruler marks provide a contrast to emphasize the range of angles of the plurality of layers of the bonded abrasive article. Preparation of the bonded abrasive article of FIG. 4B is described below in Example 3.

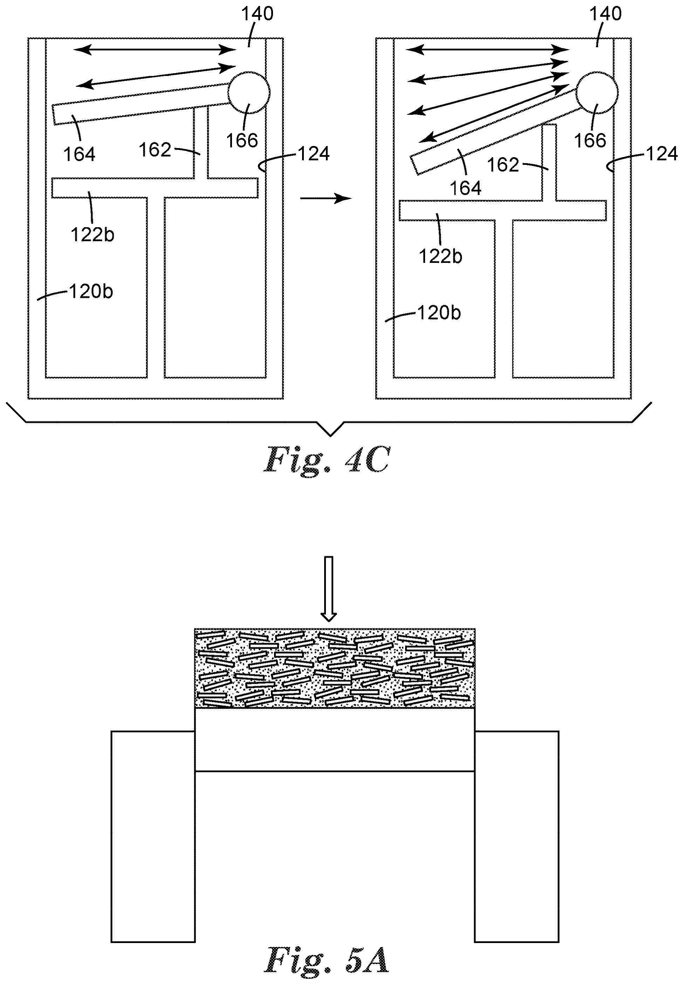

Referring now to FIG. 4C, an exemplary modified powder bed is schematically depicted, in which the powder bed can be tilted during the process used in making a bonded abrasive article. There is a post 162 (or posts) fixed onto the piston 122b such that the post 162 moves vertically with the piston 122b. Above the post 162, there is a plate 164 operably connected to a hinge 166, which is attached to a side 124 of the powder chamber 120b. In operation, similar to the depiction in FIG. 2A, a layer of loose powder particles from a powder chamber with a movable piston is deposited in a confined region 140 in the powder chamber 120b with the movable piston 122b. A layer of loose particles may alternatively be supplied to the confined region from a hopper, an auger, a trough, a sifter or other suitable powder handling mechanism. A spreading roller 130 pushes abrasive particles (mixed with matrix particles) into a substantially horizontal orientation. Then a treatment is selectively applied to treat an (e.g., predetermined) area of the layer. In a next step, the piston 122b and the post(s) 162 are lowered and the plate 164 tilts relative to the horizontal axis. The next layer of powder is spread on the lowered and tilted plate 164 where the abrasive particles are in substantially horizontal orientation. In the next step, treatment is selectively applied to treat another predetermined area. In the next steps, the process of lowering and tilting the plate 164 continues and provides changing orientation of abrasive particles relative to the plate 162 and the previous powder layers. Those of skill in the art can provide additional mechanisms, powder handling, and motion to create changes in the orientation of particles within the present disclosure. The double ended arrows in FIG. 4C each illustrates the substantially horizontal orientation of the abrasive particles in a layer, thus it can be seen that when a plurality of layers is formed per this embodiment, the fan shape depicted in the image of 4B can be achieved.

The abrasive particles according to the present disclosure typically include shaped abrasive particles, precisely shaped abrasive particles, abrasive platelets, abrasive rods, shaped agglomerates of abrasive particles, or combinations thereof. In certain embodiments, the abrasive particles comprise crushed abrasive particles, agglomerates of abrasive particles, or combinations thereof. Depending on the particular abrasive particles employed, the abrasive particles may comprise two substantially parallel planar surfaces. The matrix particles comprise vitreous bond precursor particles, metal bond precursor particles, resin bond precursor particles, organic compound particles, or combinations thereof.

Additionally, the bonded abrasive article optionally further includes a plurality of abrasive particles retained in the binder and oriented randomly with respect to the longitudinal axis of the bonded abrasive article. Moreover, in some embodiments, the abrasive particles comprise two or more adjacent layers of abrasive particles, wherein a first layer comprises a different type of abrasive particles than a second layer.

Suitable abrasive particles may comprise any abrasive particle used in the abrasives industry. Preferably, the abrasive particles have a Mohs hardness of at least 4, preferably at least 5, more preferably at least 6, more preferably at least 7, more preferably at least 8, more preferably at least 8.5, and more preferably at least 9. In certain embodiments, the abrasive particles comprise superabrasive particles. As used herein, the term "superabrasive" refers to any abrasive particle having a hardness greater than or equal to that of silicon carbide (e.g., silicon carbide, boron carbide, cubic boron nitride, and diamond).

In some embodiments, the abrasive particles comprise an aspect ratio of an average length to an average thickness of 1.5 or greater. As used herein, the term "length" with respect to a particle refers to the longest dimension of the particle. The term "thickness" with respect to a particle refers to the shortest dimension of the particle. In certain embodiments, the abrasive particles comprise an aspect ratio of an average length to an average thickness of 2.0 or greater, 2.5 or greater, 3.0 or greater, 4.0 or greater, 5.0 or greater, 7.5 or greater, 10.0 or greater, 12.5 or greater, or 15.0 or greater; and 20.0 or less, 18.0 or less, or 16 or less, or 15 or less, or 14 or less, or 12 or less. For instance, suitable abrasive particles could include shapes such as rods, prisms, ellipsoids, platelets, irregular (e.g., crushed) shapes, as long as they have these aspect ratios.

In certain embodiments, the abrasive particles comprise a length (i.e., largest dimension) of 2500 micrometers or less, 2000 micrometers or less, 1500 micrometers or less, 1000 micrometers or less, 800 micrometers or less, 600 micrometers or less, 500 micrometers or less, 400 micrometers or less, 300 micrometers or less, 250 micrometers or less, or 200 micrometers or less; and 10 micrometers or more, 15 micrometers or more, 25 micrometers or more, 50 micrometers or more, 75 micrometers or more, 100 micrometers or more, 125 micrometers or more, 150 micrometers or more, or 175 micrometers or more. In certain embodiments, the abrasive particles comprise a thickness (i.e., smallest dimension) of 700 micrometers or less, 600 micrometers or less, 500 micrometers or less, 400 micrometers or less, 300 micrometers or less, 200 micrometers or less, 100 micrometers or less, 55 micrometers or less, or 50 micrometers or less; and 4 micrometers or more, 5 micrometers or more, 6 micrometers or more, 8 micrometers or more, 10 micrometers or more, 15 micrometers or more, 20 micrometers or more, or 25 micrometers or more.

Specific examples of suitable abrasive materials include aluminum oxide (e.g., alpha alumina) materials (e.g., fused, heat-treated, ceramic, and/or sintered aluminum oxide materials), silicon carbide, titanium diboride, titanium nitride, boron carbide, tungsten carbide, titanium carbide, aluminum nitride, diamond, cubic boron nitride (CBN), garnet, fused alumina-zirconia, sol-gel derived abrasive particles, metal oxides such as cerium oxide, zirconium oxide, titanium oxide, and combinations thereof. In certain embodiments, the abrasive particles comprise metal oxide ceramic particles. Examples of sol-gel derived abrasive particles can be found in U.S. Pat. No. 4,314,827 (Leitheiser et al.), U.S. Pat. No. 4,623,364 (Cottringer et al.); U.S. Pat. No. 4,744,802 (Schwabel), U.S. Pat. No. 4,770,671 (Monroe et al.); and U.S. Pat. No. 4,881,951 (Monroe et al.). Agglomerate abrasive particles that comprise finer abrasive particles in a vitreous bond matrix (e.g., as described in U.S. Pat. No. 6,551,366 (D'Souza et al.)) may also be used.

When forming a vitreous bond abrasive article, the loose powder particles comprise vitreous bond precursor particles and abrasive particles. When forming a metal bond abrasive article, the loose powder particles comprise metal particles and abrasive particles. In certain embodiments of forming a metal bond abrasive article, the metal particles comprise higher melting metal particles. When forming a resin bond abrasive article, the loose powder particles comprise resin bond precursor particles and abrasive particles. Optionally, organic compound particles are included in any of the above articles.

The vitreous bond precursor particles may comprise particles of any material that can be thermally converted into a vitreous material. Examples include glass frit particles, ceramic particles, ceramic precursor particles, and combinations thereof.

The vitreous bond which binds together the abrasive grain in accordance with this disclosure can be of any suitable composition which is known in the abrasives art. The vitreous bond phase, also variously known in the art as a "ceramic bond", "vitreous phase", "vitreous matrix", or "glass bond" (e.g., depending on the composition) may be produced from one or more oxide (e.g., a metal oxide and/or boria) and/or at least one silicate as frit (i.e., small particles), which upon being heated to a high temperature react to form an integral vitreous bond phase. Examples include glass particles (e.g., recycled glass frit, water glass frit), silica frit (e.g., sol-gel silica frit), alumina trihydrate particles, alumina particles, zirconia particles, and combinations thereof. Suitable frits, their sources and compositions are well known in the art.

Vitreous bonded abrasive articles are typically prepared by forming a green structure comprised of abrasive grain, the vitreous bond precursor, an optional pore former, and a temporary binder. The green structure is then fired. The vitreous bond phase is usually produced in the firing step of the process for producing the abrasive article of this disclosure. Typical firing temperatures are in the range of from 540°C to 1700°C (1000°F to 3100°F). It should be understood that the temperature selected for the firing step and the composition of the vitreous bond phase must be chosen so as to not have a detrimental effect on the physical properties and/or composition of abrasive particles contained in the vitreous bond abrasive article.

Useful glass frit particles may include any glass frit material known for use in vitreous bond abrasive articles. Examples include glass frit selected from the group consisting of silica glass frit, silicate glass frit, borosilicate glass frit, and combinations thereof. In one embodiment, a typical vitreous binding material contains about 70 - 90% SiO₂ + B₂O₃, 1-20% alkali oxides, 1-20% alkaline earth oxides, and 1-20% transition metal oxides. In another embodiment, the vitreous binding material has a composition of about 82 wt% SiO₂ + B₂O₃, 5% alkali metal oxide, 5% transition series metal oxide, 4% Al₂O₃, and 4% alkaline earth oxide. In another embodiment, a frit having about 20% B₂O₃, 60% silica, 2% soda, and 4% magnesia may be utilized as the vitreous binding material. One of skill in the art will understand that the particular components and the amounts of those components can be chosen in part to provide particular properties of the final abrasive article formed from the composition.

The size of the glass frit can vary. For example, it may be the same size as the abrasive particles, or different. Typically, the average particle size of the glass frit ranges from about 0.01 micrometer to about 100 micrometers, preferably about 0.05 micrometer to about 50 micrometers, and most preferably about 0.1 micrometer to about 25 micrometers. The average particle size of the glass frit in relation to the average particle size of the abrasive particles having a Mohs hardness of at least about 4 can vary. Typically, the average particle size of the glass frit is about 1 to about 200 percent of the average particle size of the abrasive, preferably about 10 to about 100 percent, and most preferably about 15 to about 50 percent.

Typically, the weight ratio of vitreous bond precursor particles to abrasive particles in the loose powder particles ranges from about 10:90 to about 90:10. The shape of the vitreous bond precursor particles can also vary. Typically, they are irregular in shape (e.g., crushed and optionally graded), although this is not a requirement. For example, they may be spheroidal, cubic, or some other predetermined shape.

Preferably, the coefficient of thermal expansion of the vitreous bond precursor particles is the same or substantially the same as that of the abrasive particles.

One preferred vitreous bond has an oxide-based mole percent (%) composition of SiO₂ 63.28; TiO₂ 0.32; Al₂O₃ 10.99; B₂O₃ 5.11; Fe₂O₃ 0.13; K₂O 3.81; Na₂O 4.20; Li₂O 4.98; CaO 3.88; MgO 3.04 and BaO 0.26. Firing of these ingredients is typically accomplished by raising the temperature from room temperature to the desired sintering temperature (e.g., 1149° C (2100° F)), over a prolonged period of time (e.g., about 25-26 hours), holding at the maximum temperature (e.g., for several hours), and then cooling the fired article to room temperature over an extended period of time (e.g., 25-30 hours).

It is known in the art to use various additives in the making of vitreous bonded abrasive articles both to assist in the making of the abrasive article and/or improve the performance of such articles. Such conventional additives which may also be used in the practice of this disclosure include but are not limited to lubricants, fillers, pore inducers, and processing aids. Examples of lubricants include, graphite, sulfur, polytetrafluoroethylene and molybdenum disulfide. Examples of pore inducers include glass bubbles and organic particles. Concentrations of the additives as are known in the art may be employed for the intended purpose of the additive, for example. Preferably, the additives have little or no adverse effect on abrasive particles employed in the practice of this disclosure.

The vitreous bond precursor particles may comprise ceramic particles. In such cases sintering and/or fusing of the ceramic particles forms the vitreous matrix. Any sinterable and/or fusible ceramic material may be used. Preferred ceramic materials include alumina, zirconia, and combinations thereof. The inorganic vitreous bond precursor optionally includes a precursor of alpha alumina. In certain embodiments, the abrasive particles and the vitreous bond material have the same chemical composition.

If desired, alpha-alumina ceramic particles may be modified with oxides of metals such as magnesium, nickel, zinc, yttria, rare earth oxides, zirconia, hafnium, chromium, or the like. Alumina and zirconia abrasive particles may be made by a sol-gel process, for example, as disclosed in U.S. Pat. Nos. 4,314,827 (Leitheiser et al.); 4,518,397 (Leitheiser et al.); 4,574,003 (Gerk); 4,623,364 (Cottringer et al.); 4,744,802 (Schwabel); and 5,551,963 (Larmie).

The vitreous bond precursor particles may be present in an amount from 10 to 40 volume percent of the combined volume of the vitreous bond precursor particles and abrasive particles, preferably from 15 to 35 volume percent of the abrasive composition.

In the case of the metal bond precursor particles, the optional higher melting metal particles may comprise any metal from group 2 through to group 15 of the Periodic Table of the elements, for example. Alloys of these metals, and optionally with one or more elements (e.g., metals and/or non-metals such as carbon, silicon, boron) in groups 1 and 15 of the Periodic Table, may also be used. Examples of suitable metal particles include powders comprising magnesium, aluminum, iron, titanium, niobium, tungsten, chromium, tantalum, cobalt, nickel, vanadium, zirconium, molybdenum, palladium, platinum, copper, silver, gold, cadmium, tin, indium, tantalum, zinc, alloys of any of the foregoing, and combinations thereof.

Higher melting metal particles preferably having a melting point of at least about 1100°C, and more preferably at least 1200°C, although lower melting metals may also be used. Examples include stainless steel (about 1360-1450°C), nickel (1452°C), steel (1371°C), tungsten (3400°C), chromium (1615°C), Inconel (Ni+Cr+Fe, 1390-1425°C), iron (1530°C), manganese (1245-1260°C), cobalt (1132°C), molybdenum (2625°C), Monel (Ni+Cu, 1300-1350°C), niobium (2470°C), titanium (1670°C), vanadium (1900°C), antimony (1167°C), Nichrome (Ni+Cr, 1400°C), alloys of the foregoing (optionally also including one or more of carbon, silicon, and boron), and combinations thereof. Combinations of two or more different higher melting metal particles may also be used.

The loose powder particles may optionally further comprise lower melting metal particles (e.g., braze particles). The lower melting metal particles preferably have a maximum melting point that is at least 50°C lower (preferably at least 75°C lower, at least 100°C, or even at least 150°C lower) than the lowest melting point of the higher melting metal particles. As used herein, the term "melting point" includes all temperatures in a melting temperature range of a material. Examples of suitable lower melting metal particles include particles of metals such as aluminum (660°C), indium (157°C), brass (905-1083°C), bronze (798-1083°C), silver (961°C), copper (1083°C), gold (1064°C), lead (327°C), magnesium (671°C), nickel (1452°C, if used in conjunction with higher melting point metals), zinc (419°C), tin (232°C), active metal brazes (e.g., InCuAg, TiCuAg, CuAg), alloys of the foregoing, and combinations thereof.

Typically, the weight ratio of high melting metal particles and/or optional lower melting metal particles to the abrasive particles ranges from about 10:90 to about 90:10, although this is not a requirement.

Regarding resin bonded abrasive articles, binder material precursors for resin bond precursor materials generally include one or more organic thermosetting compounds, typically containing one or more additive(s) such as, for example, fillers, curatives (e.g., catalysts, hardeners, free-radical initiators (photo- or thermal), grinding aids (e.g., cryolite), pigments, plasticizers, antiloading compounds, lubricants, coupling agents, antioxidants, light stabilizers, and/or antistatic agents. Examples of suitable organic thermosetting compounds include phenolic resins (e.g., novolac and/or resole phenolic resins), acrylic monomers (e.g., poly(meth)acrylates, (meth)acrylic acid, (meth)acrylamides), epoxy resins, cyanate resins, isocyanate resins (include polyurea and polyurethane resins), alkyd resins, urea- formaldehyde resins, aminoplast resins, and combinations thereof. During curing, these thermosetting compounds develop a covalently crosslinked bond network that hardens and strengthens the resulting resin bond material.

Useful phenolic resins include novolac and resole phenolic resins. Novolac phenolic resins are characterized by being acid-catalyzed and having a ratio of formaldehyde to phenol of less than one, typically between 0.5: 1 and 0.8: 1. Resole phenolic resins are characterized by being alkaline catalyzed and having a ratio of formaldehyde to phenol of greater than or equal to one, typically from 1 : 1 to 3 : 1. Novolac and resole phenolic resins may be chemically modified (e.g., by reaction with epoxy compounds), or they may be unmodified. Exemplary acidic catalysts suitable for curing phenolic resins include sulfuric, hydrochloric, phosphoric, oxalic, and p-toluenesulfonic acids. Alkaline catalysts suitable for curing phenolic resins include sodium hydroxide, barium hydroxide, potassium hydroxide, calcium hydroxide, organic amines, and/or sodium carbonate.

Examples of commercially available phenolic resins include those known by the trade designations "DUREZ" and "VARCUM" from Durez Corporation, Novi, Michigan; "RESINOX" from Monsanto Corp., Saint Louis, Missouri; "AROFENE" and "AROTAP" from Ashland Chemical Co., Columbus, Ohio; and "RUTAPHEN" by Momentive, Columbus, Ohio; and "PHENOLITE" by Kangnam Chemical Company Ltd. of Seoul, South Korea. Examples of commercially available novolac resins include those marketed as DUREZ 1364 and VARCUM 29302 from Durez Corporation. Examples of commercially available resole phenolic resins include VARCUM resoles in grades 29217, 29306, 29318, 29338, and 29353; AEROFENE 295; and PHENOLITE TD-2207.

Examples of useful aminoplasts include those available as CYMEL 373 and CYMEL 323 from Cytec Inc., Stamford, Connecticut.

Examples of useful urea-formaldehyde resins include that marketed as AL3029R from Borden Chemical, Columbus, Ohio, and those marketed as AMRES LOPR, AMRES PR247HV and AMRES PR335CU by Georgia Pacific Corp., Atlanta, Georgia.

Examples of useful polyisocyanates include monomeric, oligomeric, and polymeric polyisocyanates (e.g., diisocyanates and triisocyanates), and mixtures and blocked versions thereof. Polyisocyanates may be aliphatic, aromatic, and/or a mixture thereof.

Examples of useful polyepoxides include monomeric polyepoxides, oligomeric polyepoxides, polymeric polyepoxides, and mixtures thereof. The polyepoxides may be aliphatic, aromatic, or a mixture thereof.

Examples of alicyclic polyepoxides monomers include epoxycyclohexane-carboxylates (e.g., 3,4-epoxycyclohexylmethyl 3,4-epoxycyclohexanecarboxylate (e.g., as available under the trade designation "ERL-4221" from Dow Chemical Co. (Midland, Mich.); 3,4-epoxy-2-methylcyclohexylmethyl 3,4-epoxy-2-methylcyclohexane-carboxylate, bis(3,4-epoxy-6-methylcyclohexylmethyl)adipate, 3,4-epoxy-6-methylcyclohexylmethyl 3,4-epoxy-6-methylcyclohexanecarboxylate (available as ERL-4201 from Dow Chemical Co.); vinylcyclohexene dioxide (available as ERL-4206 from Dow Chemical Co.); bis(2,3-epoxycyclopentyl)ether (available as ERL-0400 from Dow Chemical Co.), bis(3,4-epoxy-6-methylcyclohexylmethyl)adipate (available as ERL-4289 from Dow Chemical Co.), dipenteric dioxide (available as ERL-4269 from Dow Chemical Co.), 2-(3,4-epoxycyclohexyl-5,1'-spiro-3',4'-epoxycyclohexane-1,3-dioxane, and 2,2-bis(3,4-epoxycyclohexyl)propane, and polyepoxide resins derived from epichlorohydrin.

Examples of aromatic polyepoxides include polyglycidyl ethers of polyhydric phenols such as: Bisphenol A- type resins and their derivatives, including such epoxy resins having the trade designation "EPON" available from Resolution Performance Products, Houston, Texas; epoxy cresol-novolac resins; Bisphenol-F resins and their derivatives; epoxy phenol-novolac resins; and glycidyl esters of aromatic carboxylic acids (e.g., phthalic acid diglycidyl ester, isophthalic acid diglycidyl ester, trimellitic acid triglycidyl ester, and pyromellitic acid tetraglycidyl ester), and mixtures thereof. Commercially available aromatic polyepoxides include, for example, those having the trade designation "ARALDITE" available from Ciba Specialty Chemicals, Tarrytown, New York; aromatic polyepoxides having the trade designation "EPON" available from Resolution Performance Products; and aromatic polyepoxides having the trade designations "DER", "DEN", and "QUATREX" available from Dow Chemical Co.

Polyepoxide(s) are typically combined with a curing agent such as for example, a polyamine (e.g., a bis(imidazole)), polyamide (e.g., dicyandiamide), polythiol, or an acidic catalyst, although may not be required for curing.

Useful acrylic resins may include at least one (meth)acrylate (the term "(meth)acrylate" refers to acrylate and/or methacrylate) monomer or oligomer having an average acrylate functionality of at least two, for example, at least 3, 4, or even 5, and may be a blend of different (meth) acrylate monomers, (meth)acrylate oligomers, and/or (meth)acrylated polymers. A wide variety of (meth)acrylate monomers, (meth)acrylate oligomers, and (meth)acrylated polymers are readily commercially available, for example, from such vendors as Sartomer Company, Exton, Pennsylvania, and UCB Radcure, Smyrna, Georgia. Exemplary acrylate monomers include ethylene glycol di(meth)acrylate, hexanediol di(meth)acrylate, triethylene glycol di(meth)acrylate, trimethylolpropane tri(meth)acrylate, glycerol tri(meth)acrylate, pentaerythritol tri(meth)acrylate, ethoxylated trimethylolpropane tri(meth)acrylate, neopentyl glycol di(meth) acrylate, pentaerythritol tetra(meth)acrylate, dipentaerythritol penta(meth)acrylate, sorbitol tri(meth) acrylate, sorbitol hexa(meth)acrylate, Bisphenol A di(meth) acrylate, ethoxylated Bisphenol A di(meth)acrylates, and mixtures thereof. Additional useful polyfunctional (meth)acrylate oligomers include polyether oligomers such as a polyethylene glycol 200 diacrylate marketed by Sartomer Company as SR 259; and polyethylene glycol 400 diacrylate marketed by Sartomer Company as SR 344.

Polymerizable acrylic monomers and oligomers such as those above, are typically cured with the aid of at least one free-radical thermal initiator (e.g., organic peroxides) or photoinitiator (e.g., thioxanthones, acylphosphines, acylphosphine oxides, benzoin ketals, alpha-hydroxy ketones, and alpha-dialkylamino ketones). Typical amounts range from 0.1 to 10 percent by weight, preferably 1 to 3 percent by weight, based on the weight of the resin bond material precursor.

Organic thermosetting compound(s) and optional thermoplastic polymer (if present) are typically used in an amount sufficient to result in a total resin bond material content of from about 5 to about 30 percent, more typically about 10 to about 25 percent, and more typically about 15 to about 24 percent by weight, based on the total weight of the resultant bonded abrasive article, although other amounts may also be used.

In a preferred embodiment, the binder material precursor comprises a novolac-type phenolic resin in combination with furfuryl alcohol and filler. Novolac resins are typically solids at room temperature, but by addition of furfuryl alcohol and filler (and any additional components) they are preferably formulated to form a malleable and/or putty-like composition that is moldable, but will retain its shape unless heated and/or subjected to mechanical force (e.g., stretched or squished). Examples of commercially available novolac phenolic resins include those available as: GP 2074, GP 5300, GP 5833, RESI-FLAKE GP-2049, RESI-FLAKE GP-2050, and RESI-FLAKE GP-221 1 from Georgia Pacific Resins, Atlanta, Georgia; RUTAPHEN 8656F from Bakelite AG, Frielendorf, Germany; and DURITE 423 A and DURITE SD 1731 from Borden Chemical, Inc. Columbus, Ohio.

As noted above, the loose powder particles optionally include organic compound particles, which have been discovered to be capable of holding together the abrasive particles (as well as other types of particles present in the loose powder particles) upon the select application of heat. In many embodiments, the organic compound particles have a melting point between 50 degrees Celsius and 250 degrees Celsius, inclusive, such as between 100 degrees Celsius to 180 degrees Celsius, inclusive. Stated another way, in certain embodiments, the organic compound particles have a melting point of at least 50 degrees Celsius, or at least 60, or at least 70, or at least 80, or at least 90, or at least 100, or at least 110, or at least 120, or at least 130 degrees Celsius; and a melting point of up to 250 degrees Celsius, or up to 240, or up to 230, or up to 220, or up to 210, or up to 200, or up to 190, or up to 180, or up to 170, or up to 160 degrees Celsius.

The organic compound particles are not particularly limited, and are optionally selected from waxes, sugars, dextrins, thermoplastics having a melting point of no greater than 250 degrees Celsius, acrylates, methacrylates, and combinations thereof.

Suitable waxes include for example and without limitation, materials of vegetable, animal, petroleum, and/or mineral derived origin. Representative waxes include carnauba wax, candelilla wax, oxidized Fischer-Tropsch wax, microcrystalline wax, lanolin, bayberry wax, palm kernel wax, mutton tallow wax, polyethylene wax, polyethylene copolymer wax, petroleum derived waxes, montan wax derivatives, polypropylene wax, oxidized polyethylene wax, and combinations thereof.

Suitable sugars include for example and without limitation, lactose, trehalose, glucose, sucrose, levulose, dextrose, and combinations thereof.

Suitable dextrins include for example and without limitation, gamma-cyclodextrin, alpha-cyclodextrin, beta-cyclodextrin, glucosyl-alpha-cyclodextrin, maltosyl-alpha-cyclodextrin, glucosyl-beta-cyclodextrin, maltosyl-beta-cyclodextrin, 2-hydroxy-beta-cyclodextrin, 2-hydroxypropyl-beta-cyclodextrin, 2-hydroxypropyl-gamma-cyclodextrin, hydroxyethyl-beta-cyclodextrin, methyl-beta-cyclodextrin, sulfobutylether-alpha-cyclodextrin, sulfobutylether-beta-cyclodextrin, sulfobutylether-gamma-cyclodextrin, and combinations thereof.

Suitable thermoplastics include for example and without limitation, thermoplastics having a melting point of no greater than 250 degrees Celsius, such as polyethyleneterephthalate (PET), polylactic acid (PLA), polyvinyl chloride (PVC), polymethyl methacrylate (PMMA), polypropylene (PP), bisphenol-A polycarbonate (BPA-PC), polysulfone (PSF), polyether imide (PEI), and combinations thereof.

Suitable acrylates and methacrylates include for example and without limitation, urethane acrylates, epoxy acrylates, polyester acrylates, acrylated (meth)acrylics, polyether acrylates, acrylated polyolefins, and combinations thereof, or their methacrylate analogs.

The organic compound particles are typically present in an amount of 2.5 weight percent to 30 weight percent of the loose powder particles, inclusive, such as 5 weight percent to 20 weight percent of the loose powder particles, inclusive. Stated another way, in certain embodiments the organic compound particles are present in an amount of at least 2.5 weight percent, or at least 3 weight percent, or at least 4 weight percent, or at least 5 weight percent, or at least 7 weight percent, or at least 8 weight percent, or at least 10 weight percent, or at least 12 weight percent of the loose powder particles; and up to 30 weight percent, or up to 28 weight percent, or up to 25 weight percent, or up to 23 weight percent, or up to 20 weight percent, or up to 18 weight percent of the loose powder particles. Typically, the average particle size of the organic compound particles ranges from about 1 micrometer to about 100 micrometers, preferably about 5 micrometers to about 50 micrometers, and most preferably about 10 micrometers to about 30 micrometers.

The loose powder particles may optionally further comprise other components such as, for example, pore inducers, fillers, and/or fluxing agent particles. Examples of pore inducers include glass bubbles and organic particles. In some embodiments, the lower melting metal particles may also serve as a fluxing agent; for example as described in U.S. Pat. No. 6,858,050 (Palmgren).

The loose powder particles may optionally be modified to improve their flowability and the uniformity of the layer spread. Methods of improving the powders include agglomeration, spray drying, gas or water atomization, flame forming, granulation, milling, and sieving. Additionally, flow agents such as, for example, fumed silica, nanosilica, stearates, and starch may optionally be added.

In order to achieve fine resolution, the loose powder particles are preferably sized (e.g., by screening) to have a maximum size of less than or equal to 2500 microns, preferably less than or equal to 750 microns, more preferably less than or equal to 200 microns, more preferably less than or equal to 150 microns, less than or equal to 100 microns, or even less than or equal to 80 microns, although larger sizes may also be used. In certain embodiments, the loose powder particles have an average particle diameter of less than or equal to one micron (e.g., "submicron"); for example less than or equal to 500 nanometers (nm), or even less than or equal to 150 nm. The various components of the loose powder particles may have the same or different maximum particle sizes, D₉₀, D₅₀, and/or D₁₀ particle size distribution parameters.

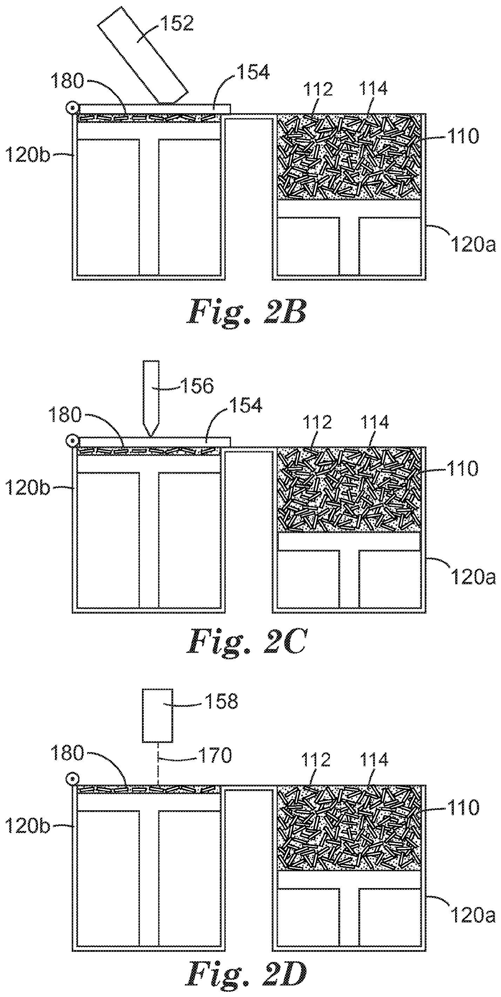

Referring to FIG. 2A again, treatment 170 is selectively applied to treat an (e.g., predetermined) area 180 of the layer 138. Typically, treatment 170 comprises binder jetting, applying heat via conduction or irradiation, or combinations thereof. For binder jetting, a liquid binder precursor material is jetted by a printer 150 onto the predetermined area 180. This treatment method is described in detail below. For applying heat, the source 150 of treatment is not particularly limited, and includes for instance and without limitation, a single source or a multipoint source. Suitable single point sources include for instance, a heated tip 156 and a laser 158. A heated tip typically includes a heated metal tip or a heated ceramic tip, such as a metal tip found on a common soldering tool. The skilled practitioner can select a suitable low powered laser, for instance, the CUBE 405-100C Diode Laser System from Coherent Inc. (Santa Clara, CA). Useful multipoint sources include a thermal print head, such as commonly used in direct thermal printing or thermal transfer printing, and two or more lasers. For instance, one suitable thermal print head is model KEE-57-24GAG4-STA, available from KYOCERA Corporation (Kyoto, Japan). Hence, referring to FIG. 2B, the third step of the process of FIG. 2A is shown with a thermal print head 152 heat source. A film 154 is disposed on the layer 138 to provide a barrier between the thermal print head 152 heat source and the area 180 of the layer 138. Suitable films include, for instance and without limitation, polyethylene terephthalate (PET), polyethylene naphthalate (PEN), polyimide, polytetrafluoroethylene (PTFE), perfluoroalkoxy (PFA), and other films known to be stable at high temperatures.

Referring to FIG. 2C, the third step of the process of FIG. 2A is shown with a single tip 156 heat source. A film 154 is disposed on the layer 138 to provide a barrier between the single tip 156 heat source and the area 180 of the layer 138. Referring now to FIG. 2D, the third step of the process of FIG. 2A is shown with a laser 158 heat source. FIG. 2D further includes the laser beam 170 being directed at the area 180 of the layer 138. No film is provided in this illustrated exemplary embodiment.

The heat softens and/or melts matrix particles and/or organic compound particles in the selected area 180 of the layer 138, to bond the loose powder particles together according to a predetermined pattern (and ultimate 3-D shape upon multiple repetitions). In certain embodiments in which the heat is applied using a single heated tip, the tip optionally further applies pressure to the (e.g., predetermined) area of the layer of loose powder particles. An advantage of applying pressure is that the pressure may be effective to densify the powder particles, especially if the loose powder particles contain a large amount of organic compound particles. Referring again to FIG. 2A, the matrix material and/or the organic compound material bonds together the loose powder particles in at least one predetermined region (or area) of the loose powder particles to form a layer of bonded powder particles.

The above steps are then repeated (step 185) with changes to the region where applying heat is carried out according to a predetermined design resulting through repetition, layer on layer, in a three-dimensional (3-D) abrasive article preform. In each repetition, the loose powder particles may be independently selected; that is, some or all of the loose powder particles may be the same as, or different from those in adjacent deposited layers.

Powder bed binder jetting is an additive manufacturing, or "3D printing" technology, in which a thin layer of a powder is temporarily bonded at desired locations by a jetted liquid binder mixture. Typically, that binder mixture is dispensed by an inkjet printing head, and consists of a polymer dissolved in a suitable solvent or carrier solution. In one method, the binder is a powder which is mixed with the other powder, or coated onto the powder and dried, and then an activating liquid, such as water or a solvent mixture, is jetted onto the powder, activating the binder in select areas. The printed powder layer is then at least partially dried and lowered so that a next powder layer can be spread. The powder spreading, bonding and drying processes can be repeated until the full object is created. The object and surrounding powder is removed from the printer and often dried or cured to impart additional strength so that the now hardened object can be extracted from the surrounding powder.

Referring again to FIG. 2A, in certain embodiments a liquid binder precursor material 170 is jetted by printer 150 onto predetermined region(s) 180 of layer 138. The liquid binder precursor material thus coats the loose powder particles in region 180, and is subsequently converted to a binder material that binds the loose powder particles in region 180 to each other. The liquid binder precursor material may be any composition that can be converted (e.g., by evaporation, or thermal, chemical, and/or radiation curing (e.g., using UV or visible light)) into a binder material that bonds the loose powder particles together according to the jetted pattern (and ultimate 3-D shape upon multiple repetitions).

In some embodiments, the liquid binder precursor material comprises a liquid vehicle having a polymer dissolved therein. The liquid may include one or more of organic solvent and water. Exemplary organic solvents include alcohols (e.g., butanol, ethylene glycol monomethyl ether), ketones, and ethers, preferably having a flash point above 100°C. Selection of a suitable solvent or solvents will typically depend upon requirements of the specific application, such as desired surface tension and viscosity, the selected particulate solid, for example. The liquid vehicle can be entirely water, or can contain water in combination with one or more organic solvents. Preferably, the aqueous vehicle contains, on a total weight basis, at least 20 percent water, at least 30 percent water, at least 40 percent water, at least 50 percent water, or even at least 75 percent water.

In some embodiments, one or more organic solvents may be included in the liquid vehicle, for instance, to control drying speed of the liquid vehicle, to control surface tension of the liquid vehicle, to allow dissolution of an ingredient (e.g., of a surfactant), or, as a minor component of any of the ingredients; e.g., an organic co-solvent may be present in a surfactant added as an ingredient to the liquid vehicle. Exemplary organic solvents include: alcohols such as methyl alcohol, ethyl alcohol, n-propyl alcohol, isopropyl alcohol, n-butyl alcohol, sec-butyl alcohol, t-butyl alcohol, and isobutyl alcohol; ketones or ketoalcohols such as acetone, methyl ethyl ketone, and diacetone alcohol; esters such as ethyl acetate and ethyl lactate; polyhydric alcohols such as ethylene glycol, diethylene glycol, triethylene glycol, propylene glycol, butylene glycol, 1,4-butanediol, 1,2,4-butanetriol, 1,5-pentanediol, 1,2,6-hexanetriol, hexylene glycol, glycerol, glycerol ethoxylate, trimethylolpropane ethoxylate; lower alkyl ethers such as ethylene glycol methyl or ethyl ether, diethylene glycol ethyl ether, triethylene glycol methyl or ethyl ether, ethylene glycol n-butyl ether, diethylene glycol n-butyl ether, diethylene glycol methyl ether, ethylene glycol phenyl ether, propylene glycol methyl ether, dipropylene glycol methyl ether, tripropylene glycol methyl ether, propylene glycol methyl ether acetate, dipropylene glycol methyl ether acetate, propylene glycol n-propyl ether, dipropylene glycol n-propyl ether, tripropylene glycol n-propyl ether, propylene glycol n-butyl ether, dipropylene glycol n-butyl ether, tripropylene glycol n-butyl ether, propylene glycol phenyl ether, and dipropylene glycol dimethyl ether; nitrogen-containing compounds such as 2-pyrrolidinone and N-methyl-2-pyrrolidinone; sulfur-containing compounds such as dimethyl sulfoxide, tetramethylene sulfone, and thioglycol; and combinations of any of the foregoing.

The amounts of organic solvent and/or water within the liquid vehicle can depend on a number of factors, such as the particularly desired properties of the liquid binder precursor material such as the viscosity, surface tension, and/or drying rate, which can in turn depend on factors such as the type of ink jet printing technology intended to be used with the liquid vehicle ink, such as piezo-type or thermal-type printheads, for example.

The liquid binder precursor material may include a polymer that is soluble or dispersible in the liquid vehicle. Examples of suitable polymers may include polyvinyl pyrrolidones, polyvinyl caprolactams, polyvinyl alcohols, polyacrylamides, poly(2-ethyl-2-oxazoline) (PEOX), polyvinyl butyrate, copolymers of methyl vinyl ether and maleic anhydride, certain copolymers of acrylic acid and/or hydroxyethyl acrylate, methyl cellulose, natural polymers (e.g., dextrin, guar gum, xanthan gum). Of these, polyvinyl pyrrolidones are preferred for use with liquid vehicles that are predominantly water. Other organic polymers than those listed above may be used instead or in addition if desired.

The liquid binder precursor material may include one or more free-radically polymerizable or otherwise radiation-curable materials; for example, acrylic monomers and/or oligomers and/or epoxy resins. An effective amount of photoinitiator and/or photocatalysts for curing the free-radically polymerizable or otherwise radiation-curable materials may also be included. Examples of suitable (meth)acrylate monomers and oligomers and otherwise radiation-curable materials (e.g., epoxy resins) can be found in, for example, U.S. Pat. No. 5,766,277 (DeVoe et al.).

In some preferred embodiments, the liquid binder precursor material is essentially free of (e.g., contains less than 1 percent, less than 0.1 percent, less than 0.01 percent, or is even free of) metal nanoparticles and/or metal oxide nanoparticles. As used herein, the term "nanoparticles" refers to particles having an average particle diameter of less than or equal to one micron; for example less than or equal to 500 nanometers (nm), or even less than or equal to 150 nm.

Alternatively, or in addition, the liquid binder precursor may be an aqueous sol comprising a ceramic precursor for alumina and/or zirconia. Examples include aqueous boehmite sols and zirconia sols. In such cases, after firing, the liquid binder precursor may have the same or different composition as the abrasive particles. Details concerning zirconia sols can be found, for example, in U. S. Pat. No. 6,376,590 (Kolb et al.). Details concerning boehmite sols can be found, for example, in U.S. Pat. Nos. 4,314, 827 (Leitheiser et al.), 5,178,849 (Bauer) 4,518,397 (Leitheiser et al.), 4,623,364 (Cottringer et al.), 4,744,802 (Schwabel), 4,770,671 (Monroe et al.), 4,881,951 (Wood et al.), 4,960,441 (Pellow et al.) 5,011,508 (Wald et al.), 5,090,968 (Pellow), 5,139,978 (Wood), 5,201,916 (Berg et al.), 5,227,104 (Bauer), 5,366,523 (Rowenhorst et al.), 5,429,647 (Larmie), 5, 547,479 (Conwell et al.), 5,498,269 (Larmie), 5,551,963 (Larmie), 5,725,162 (Garg et al.), and 5,776,214 (Wood)).

The jetted liquid binder precursor material is converted into a binder material that bonds together the loose powder particles in predetermined regions of the loose powder particles to form a layer of bonded powder particles; for example, by evaporation of a liquid vehicle in the liquid binder precursor material. In these embodiments, heating the binder material to sufficiently high temperature causes it to volatilize and/or decompose (e.g., "burn out") during a subsequent firing step. Cooling may be accomplished by any means known to the art (e.g., cold quenching or air cooling to room temperature).

Referring again to FIG. 2A, the jetted liquid binder precursor material 170 is converted (step 190) into a binder material that bonds together the loose powder particles in at least one predetermined region of the loose powder particles to form a layer of bonded powder particles; for example, by evaporation of a liquid vehicle in the liquid binder precursor material. In these embodiments, heating the binder material to sufficiently high temperature causes it to volatilize and/or decompose (e.g., "burn out") during subsequent sintering or infusion steps.

The above steps are then repeated (step 185) with changes to the region where jetting is carried out according to a predetermined design resulting through repetition, layer on layer, in a three-dimensional (3-D) abrasive article preform. In each repetition, the loose powder particles and the liquid binder precursor material may be independently selected; that is, either or both or the loose powder particles and the liquid binder precursor material may be the same as, or different from those in adjacent deposited layers.

The abrasive article preform comprises the bonded powder particles and remaining loose powder particles. Once sufficient repetitions have been carried out to form the abrasive article preform, it is preferably separated from substantially all (e.g., at least 85 percent, at least 90 percent, preferably at least 95 percent, and more preferably at least 99 percent) of the remaining loose powder particles, although this is not a requirement. In certain embodiments, at least a portion of any resin bond precursor material and/or organic compound material is burned off (e.g., volatilizing and/or decomposing) following the separation of the bonded powder particles and prior to or concurrently with infusing with a metal.

If desired, multiple particle reservoirs each containing a different powder may be used. This results in different powders/binders distributed in different and discrete regions of the abrasive article. For example, relatively inexpensive, but lower performing abrasive particles and/or vitreous bond precursor particles may be relegated to regions of a vitrified bond abrasive article where it is not particularly important to have high performance properties (e.g., in the interior away from the abrading surface). The same approach can apply to metal bond abrasive articles or resin bond abrasive articles.

Generally, vitreous bond abrasive articles made in ways according to the present disclosure have considerable porosity throughout their volumes. Accordingly, the abrasive article preform may then be infused with a solution or dispersion of additional vitreous bond precursor material, or grain growth modifiers.

In embodiments in which the loose powder particles include higher melting metal particles and lower melting metal particles, the abrasive article preform may be heated sufficiently to cause the lower melting metal particles to soften/melt and bond to at least a portion of the loose powder particles, and then cooled to provide the metal bond abrasive article. In embodiments in which the loose powder particles include higher melting metal particles and no lower melting metal particles, the abrasive article preform may be heated sufficiently to cause the higher melting metal particles to at least sinter and bond to at least a portion of the loose powder particles, and then cooled to provide the metal bond abrasive article. Cooling may be accomplished by any means known to the art; for example cold quenching or air cooling to room temperature.

Metal bond abrasive articles and/or abrasive article preforms made according to the present disclosure may comprise a porous metal-containing matrix (e.g., which may comprise metal particles and abrasive particles, and which may be sintered) with considerable porosity throughout its volume, although this is not a requirement. For example, the porous metal-containing matrix may have a void fraction of 1 to 60 volume percent, preferably 5 to 50 volume percent, and more preferably 15 to 50 volume percent, more preferably 40 to 50 volume percent, although this is not a requirement. Accordingly, the abrasive article preform may then be infused with a molten metal that has a temperature below the melting point(s) of any other metallic components, then cooled. Examples of suitable metals that can be made molten and infused into the abrasive article preform include aluminum, indium, brass, bronze, silver, copper, gold, lead, cobalt, magnesium, nickel, zinc, tin, iron, chromium, silicon alloys, alloys of the foregoing, and combinations thereof.

Further details concerning sintering and then infusing with molten metal can be found in, for example, U.S. Pat. No. 2,367,404 (Kott) and U.S. Pat. Appln. Publ. No. 2002/095875 (D'Evelyn et al.).

Advantageously, methods according to at least certain embodiments of the present disclosure are suitable for manufacturing various bonded abrasive articles that cannot be readily or easily fabricated by other methods. For example, inclusion of internal voids is possible as long as an opening to the exterior of the abrasive preform exists for removal of unbonded loose powder. Accordingly, cooling channels having tortuous and or arcuate paths can be readily manufactured using methods of the present disclosure. Cooling channels are open to the exterior of the bonded abrasive article. In some embodiments, they have a single opening, but more typically they have two or more openings. A cooling medium (e.g., air, water, emulsion, or oil) circulates through the cooling channel(s) to remove heat generated during the abrading process. Accordingly, the present disclosure provides a bonded abrasive article comprising at least one of: at least one tortuous cooling channel extending at least partially through the metal bonded abrasive article; at least one arcuate cooling channel extending at least partially through the bonded abrasive article.

The abrasive article preform 190 is then heated (step 195 in FIG. 2A) to sinter the abrasive particles with the metal or vitreous bond precursor particles or to bond the abrasive particles with the resin bond precursor particles (and to remove any organic compound material that may be present, e.g., by burning off the organic compound material), thereby providing the bonded abrasive article.

In certain embodiments, the bonded abrasive article is selected from the group consisting of an abrasive grinding bit, abrasive segments, abrasive rims, abrasive pads, and an abrasive wheel, as well as many hitherto unknown bonded abrasive articles. In some preferred embodiments, a metal bond abrasive article comprises at least a portion of a rotary dental tool (e.g., a dental drill bit, a dental bur, or a dental polishing tool).

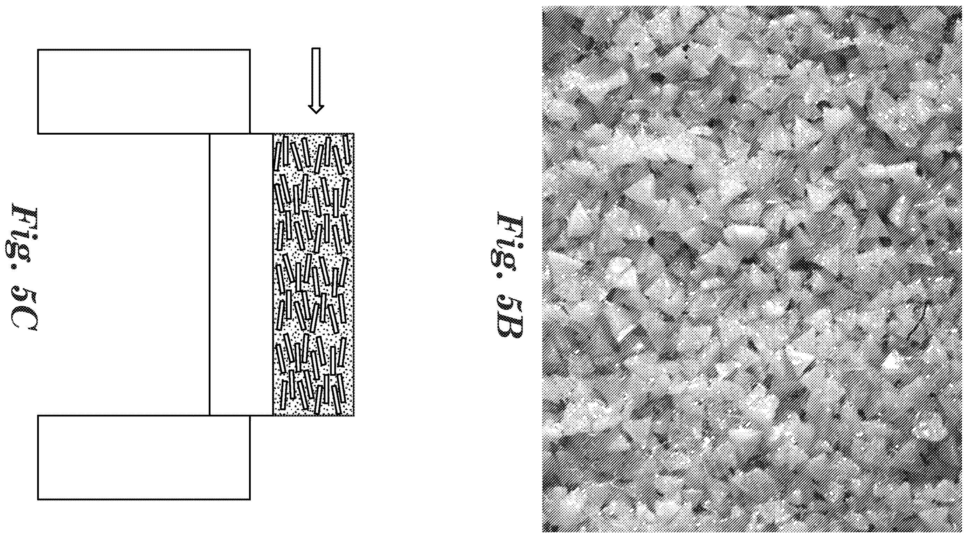

Referring to FIG. 5A, a schematic cross-sectional side view is provided of a bonded abrasive article. The abrasive particles of the bonded abrasive article are substantially horizontal with respect to the base plane of the confined region upon which each layer was deposited. FIG. 5B is an optical microscope image at 100x magnification of a bonded abrasive article, the image being of a portion of an upper (axial) surface of the article as indicated by the arrow of FIG. 5A. The image shows the planar surfaces of a plurality of triangular prism shaped abrasive particles, with at least fifty percent of the abrasive particles on the surface of the bonded abrasive article oriented within 15% of a zero degree angle.

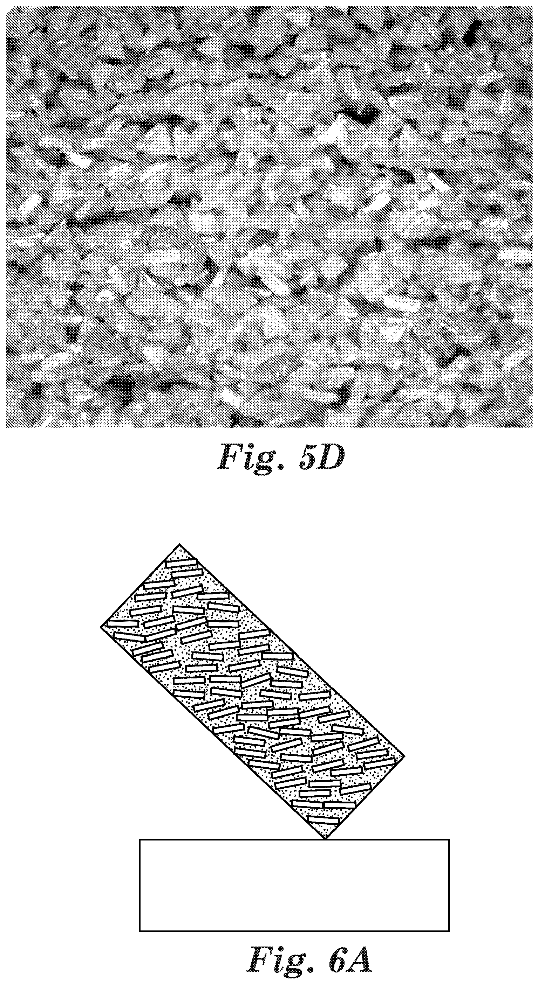

Referring now to FIG. 5C, a schematic cross-sectional side view of the bonded abrasive article of FIG. 5A is provided. FIG. 5D is an optical microscope image at 100x magnification of a bonded abrasive article, the image being of a portion of a side (radial) surface of the article as indicated by the arrow of FIG. 5C. The image shows the edge surfaces of a plurality of triangular prism shaped abrasive particles, with at least fifty percent of the abrasive particles on the surface of the bonded abrasive article oriented within 15% of a zero degree angle.

Starting with the layers of substantially horizontal abrasive particles disposed within the matrix particles, it is possible to form a bonded abrasive article having oriented particles by selectively bonding predetermined areas of each layer. FIG. 6A is a schematic cross-sectional side view of a bonded abrasive article, preparable according to the present disclosure. By selecting the predetermined areas of each layer to bond loose powder particles in the shape of a (layered) article that is tilted with respect to a longitudinal axis, it is possible to form an article having oriented abrasive particles without needing to orient the individual particles to an angle other than substantially horizontal.

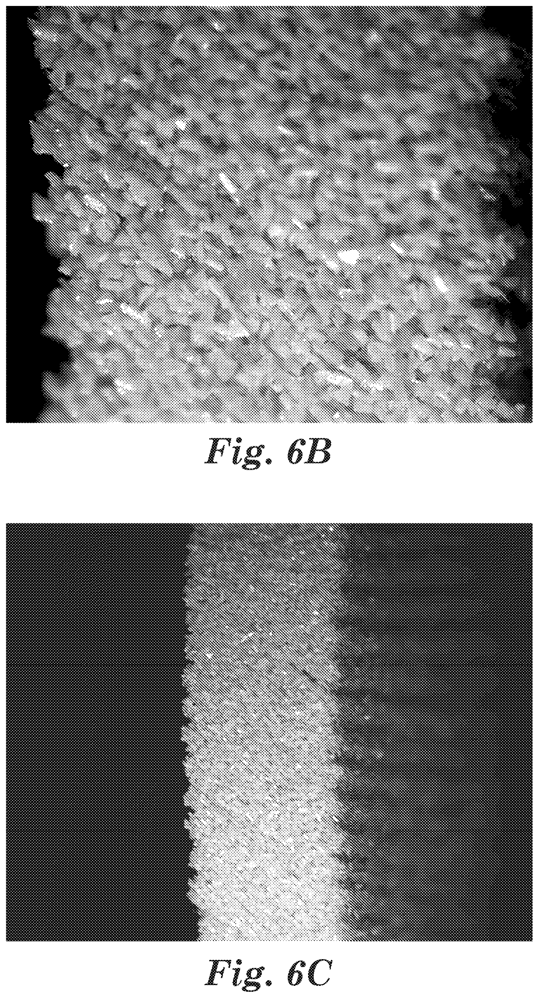

Referring now to FIG. 6B, an optical microscope image at 100x magnification is provided of a bonded abrasive article prepared according to the present disclosure. For instance, the bonded abrasive article comprises abrasive particles retained in a binder, wherein the abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using image analysis at 10,000 times magnification. The image shows the edge surfaces of a plurality of prism shaped abrasive particles of a portion of the bonded abrasive article. FIG. 6C is an optical microscope image of the bonded abrasive article of FIG. 6B at a 30x magnification, and the edges of individual bonded layers can be seen.

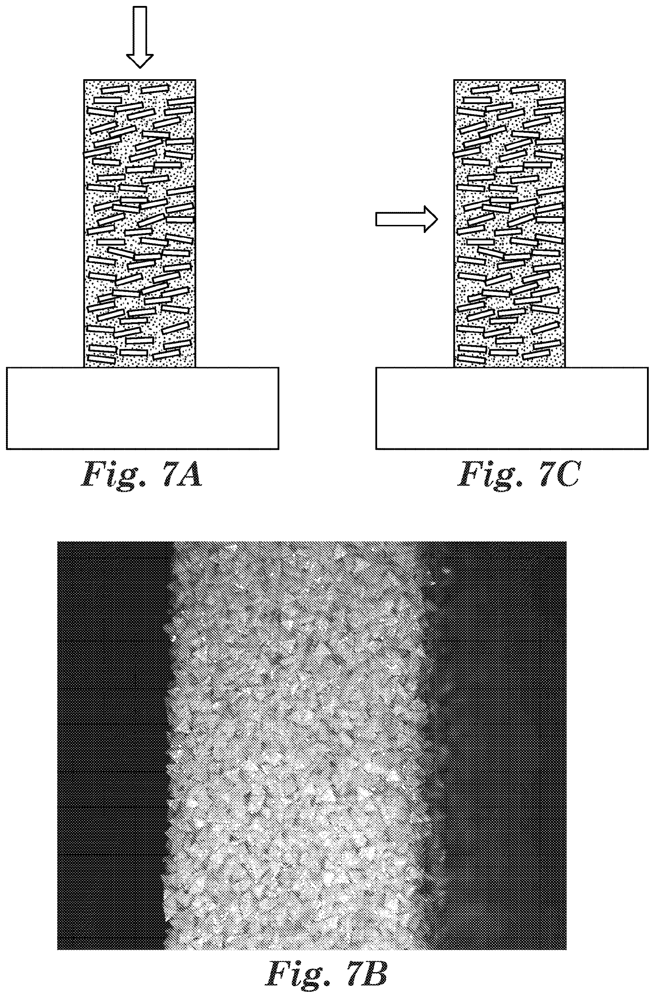

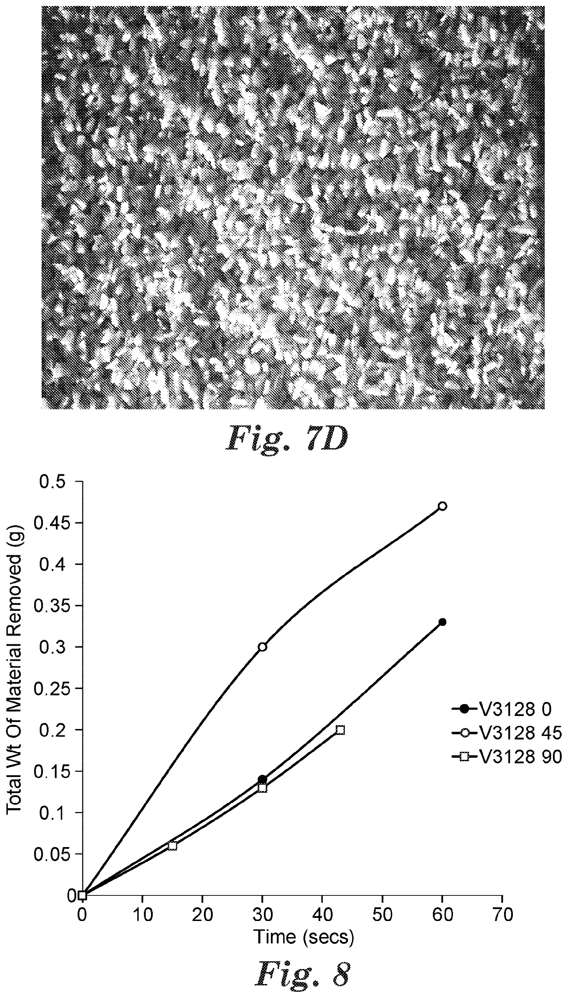

Referring now to FIGS. 7A-7D, FIG. 7A is a schematic cross-sectional side view of a bonded abrasive article, and FIG. 7B is an optical microscope image at 50x magnification of a bonded abrasive article prepared according to the present disclosure, the image being of a portion of an upper (axial) surface of the article as indicated by the arrow of FIG. 7A. The image shows the planar surfaces of a plurality of prism shaped abrasive particles, with at least fifty percent of the abrasive particles on the surface of the bonded abrasive article oriented within 15% of a zero degree angle. FIG. 7C is a schematic cross-sectional side view of the bonded abrasive article of FIG. 7A, and FIG. 7D is an optical microscope image at 50x magnification of a bonded abrasive article prepared according to the present disclosure, the image being of a portion of a side (radial) surface of the article as indicated by the arrow of FIG. 7C. The image shows the edge surfaces of a plurality of prism shaped abrasive particles, with at least fifty percent of the abrasive particles on the surface of the bonded abrasive article oriented within 15% of a zero degree angle.

In addition to the monolithic shapes depicted in FIGS. 5A-7D, bonded abrasive articles having a variety of different shapes is possible due to the capability of selecting areas of each loose powder layer to bond.

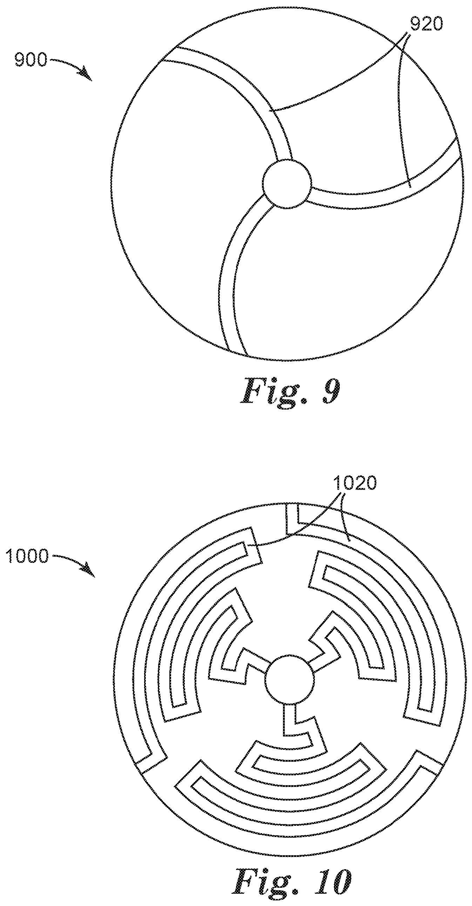

Referring now to FIG. 9, an exemplary bonded abrasive wheel 900 has arcuate and tortuous cooling channels 920, respectively.

FIG. 10 shows another exemplary bonded abrasive wheel 1000 that has tortuous cooling channels 1020.

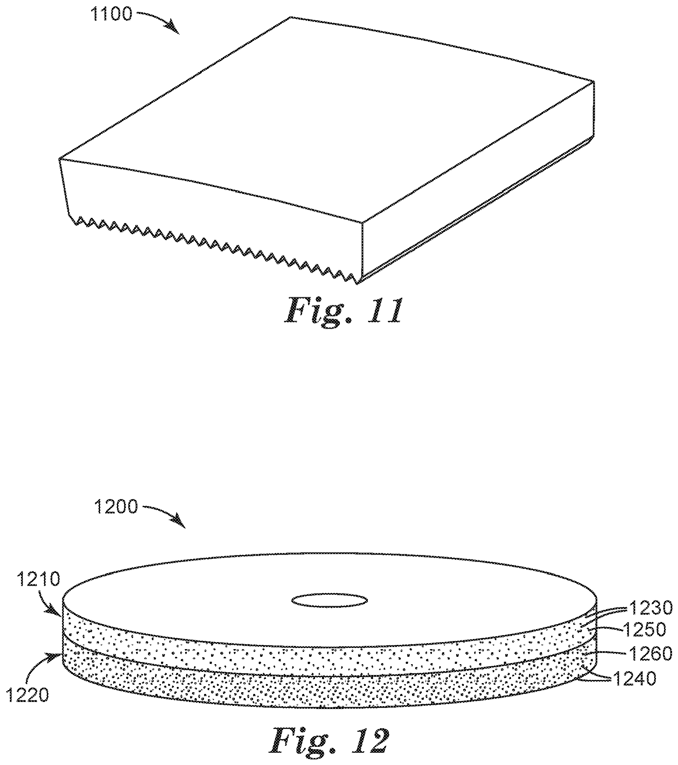

FIG. 11 shows an exemplary bonded abrasive segment 1100. In typical use, multiple bonded abrasive segments 1100 are mounted evenly spaced along the circumference of a metal disc to form an abrasive wheel.

FIG. 12 shows a vitreous bond or metal bond abrasive disc 1200 having two regions 1210, 1220. Each region has abrasive particles 1230, 1240 retained in a resin bond, vitreous bond, or metal bond matrix material 1250, 1260, respectively.

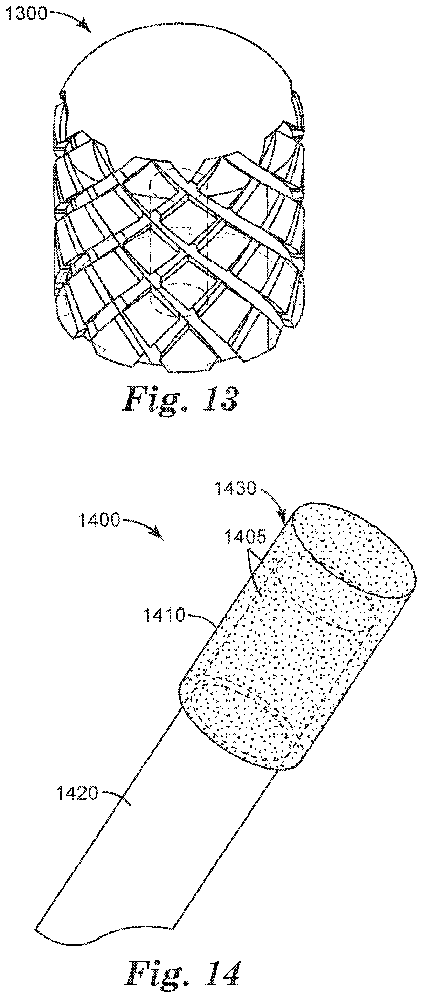

FIG. 13 shows a rotary abrasive tool 1300 (a bit for a handheld motor driven shaft such as, for example, a Dremel tool).

An exemplary dental bur 1400 is shown in FIG. 14. Referring now to FIG. 14, dental bur 1400 includes head 1430 secured to shank 1420. Dental bur 1400 comprises abrasive particles 1405 secured in porous metal bond, resin bond, or vitreous bond 1410.

The foregoing abrasive wheels shown in FIGS. 9 and 10 can be prepared by firing corresponding green bodies (i.e., having the same general shape features, but comprising a vitreous bond or metal bond precursor particles held together by a temporary binder).

In some embodiments, a (e.g., non-transitory) machine-readable medium is employed in additive manufacturing of bonded abrasive articles according to at least certain aspects of the present disclosure. Data is typically stored on the machine-readable medium. The data represents a three-dimensional model of a bonded abrasive article, which can be accessed by at least one computer processor interfacing with additive manufacturing equipment (e.g., a 3D printer, a manufacturing device, etc.). The data is used to cause the additive manufacturing equipment to create, for instance, a bonded abrasive article preform of the bonded abrasive article. In certain embodiments, the bonded abrasive article preform comprises abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification. In other embodiments, the bonded abrasive article comprises a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.

Data representing a bonded abrasive article may be generated using computer modeling such as computer aided design (CAD) data. Image data representing the bonded abrasive article design can be exported in STL format, or in any other suitable computer processable format, to the additive manufacturing equipment. Scanning methods to scan a three-dimensional object may also be employed to create the data representing the bonded abrasive article. One exemplary technique for acquiring the data is digital scanning. Any other suitable scanning technique may be used for scanning an article, including X-ray radiography, laser scanning, computed tomography (CT), magnetic resonance imaging (MRI), and ultrasound imaging. Other possible scanning methods are described, e.g., in U.S. Patent Application Publication No. 2007/0031791 (Cinader, Jr., et al.). The initial digital data set, which may include both raw data from scanning operations and data representing articles derived from the raw data, can be processed to segment an article design from any surrounding structures (e.g., a support for the bonded abrasive article).

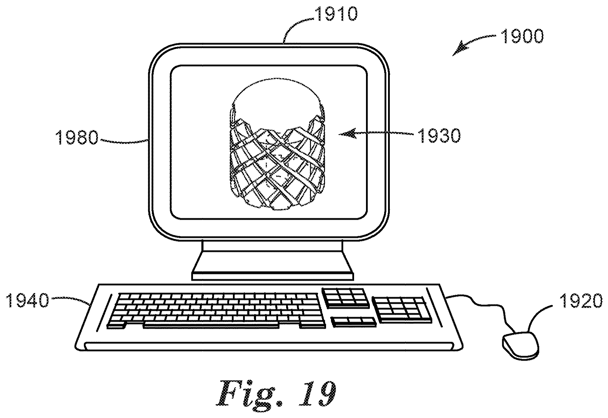

Often, machine-readable media are provided as part of a computing device. The computing device may have one or more processors, volatile memory (RAM), a device for reading machine-readable media, and input/output devices, such as a display, a keyboard, and a pointing device. Further, a computing device may also include other software, firmware, or combinations thereof, such as an operating system and other application software. A computing device may be, for example, a workstation, a laptop, a personal digital assistant (PDA), a server, a mainframe or any other general-purpose or application-specific computing device. A computing device may read executable software instructions from a computer-readable medium (such as a hard drive, a CD-ROM, or a computer memory), or may receive instructions from another source logically connected to computer, such as another networked computer. Referring to FIG. 19, a computing device 1900 often includes an internal processor 1980, a display 1910 (e.g., a monitor), and one or more input devices such as a keyboard 1940 and a mouse 1920. In FIG. 19, a rotary abrasive tool 1930 is shown on the display 1910.

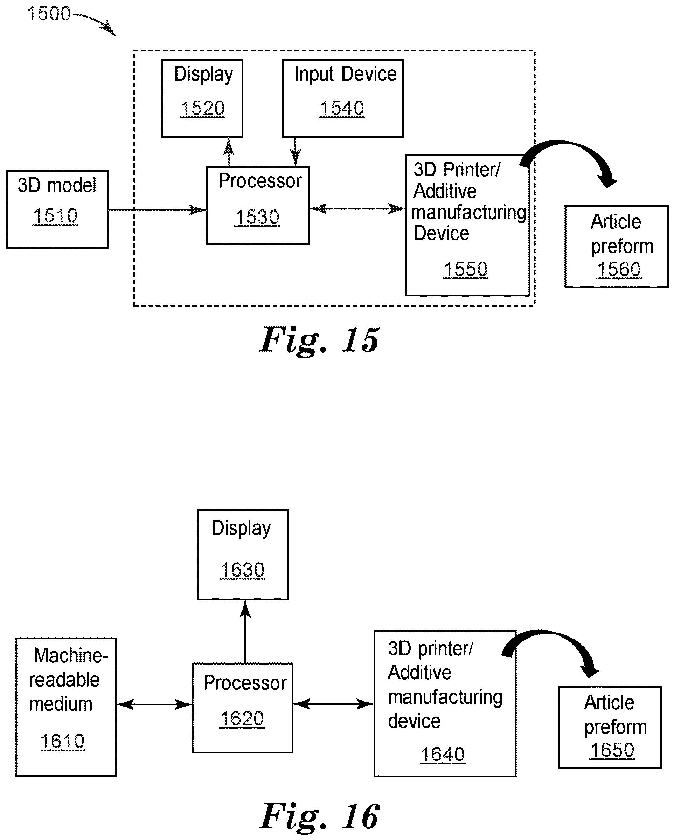

Referring to FIG. 15, in certain embodiments, the present disclosure provides a system 1500. The system 1500 comprises a display 1520 that displays a 3D model 1510 of a bonded abrasive article (e.g., a rotary abrasive tool 1930 as shown on the display 1910 of FIG. 19); and one or more processors 1530 that, in response to the 3D model 1510 selected by a user, cause a 3D printer / additive manufacturing device 1550 to create a physical object of an article preform 1560 of the bonded abrasive article. Often, an input device 1540 (e.g., keyboard and/or mouse) is employed with the display 1520 and the at least one processor 1530, particularly for the user to select the 3D model 1510. The article preform 1560 comprises a bonded abrasive article preform. In certain embodiments, the bonded abrasive article preform comprises abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification. In other embodiments, the bonded abrasive article preform comprises a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.

Referring to FIG. 16, a processor 1620 (or more than one processor) is in communication with each of a machine-readable medium 1610 (e.g., a non-transitory medium), a 3D printer / additive manufacturing device 1640, and optionally a display 1630 for viewing by a user. The 3D printer / additive manufacturing device 1640 is configured to make one or more article preforms 1650 (e.g., a bonded abrasive article preform) of an article based on instructions from the processor 1620 providing data representing a 3D model of the article preform 1650 (e.g., a rotary abrasive tool 1930 as shown on the display 1910 of FIG. 19) from the machine-readable medium 1610.

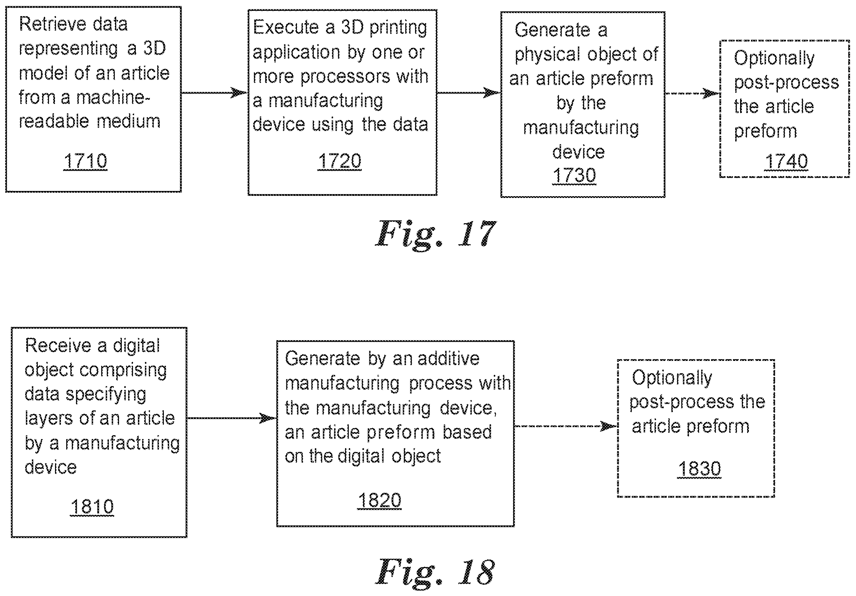

Referring to FIG. 17, for example and without limitation, an additive manufacturing method comprises retrieving 1710, from a (e.g., non-transitory) machine-readable medium, data representing a 3D model of a bonded abrasive article according to at least one embodiment of the present disclosure. The method further includes executing 1720, by one or more processors, an additive manufacturing application interfacing with a manufacturing device using the data; and generating 1730, by the manufacturing device, a physical object of a bonded abrasive article preform of the bonded abrasive article. The additive manufacturing equipment can perform the following sequential steps to form the bonded abrasive article preform:
a) a subprocess comprising sequentially:
   i) depositing a layer of loose powder particles in a confined region, wherein the loose powder particles comprise matrix particles and abrasive particles;
   ii) spreading the layer of loose powder particles with a spreading bar or roller to provide a substantially uniform thickness, wherein a gap between the spreading bar or roller and a base plane of the confined region is selected to be shorter than an average length of the abrasive particles; and
   iii) selectively treating an area of the layer of loose powder particles to bond powder particles together; and
b) independently carrying out step a) a plurality of times to generate a bonded abrasive article preform comprising the bonded powder particles and remaining loose powder particles, wherein in each step a), the loose powder particles are independently selected.

In certain embodiments, the bonded abrasive article preform comprises abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification. In other embodiments, the bonded abrasive article preform comprises a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification. One or more various optional post-processing steps 1740 may be undertaken to form a bonded abrasive article from the preform, such as c) separating substantially all of the remaining loose powder particles from the bonded abrasive article preform; and d) heating the bonded abrasive article preform to provide the bonded abrasive article comprising the abrasive particles retained in a matrix material.

Additionally, referring to FIG. 18, a method of making a bonded abrasive article preform comprises receiving 1810, by a manufacturing device having one or more processors, a digital object comprising data specifying a plurality of layers of a bonded abrasive article; and generating 1820, with the manufacturing device by an additive manufacturing process, a bonded abrasive article preform of the bonded abrasive article based on the digital object. Again, the bonded abrasive article preform may undergo one or more steps of post-processing 1830, e.g., to provide the bonded abrasive article.

### Select Embodiments of the Present Disclosure

Embodiment 1 is a bonded abrasive article. The bonded abrasive article comprises abrasive particles retained in a binder. The abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using microscopy image analysis at 10 to 1,000 times magnification.

Embodiment 2 is the bonded abrasive article of embodiment 1, further comprising a vitreous bond material.

Embodiment 3 is the bonded abrasive article of embodiment 1, further comprising a metal bond material.

Embodiment 4 is the bonded abrasive article of embodiment 1, further comprising a resin bond material.

Embodiment 5 is the bonded abrasive article of any of embodiments 1 to 4, wherein the angle is 45 degrees.

Embodiment 6 is the bonded abrasive article of any of embodiments 1 to 5, wherein the abrasive particles comprise an aspect ratio of an average length to an average thickness of 1.5 or greater.

Embodiment 7 is the bonded abrasive article of any of embodiments 1 to 6, wherein the abrasive particles comprise an aspect ratio of the average length to the average thickness of 4.0 or greater.

Embodiment 8 is the bonded abrasive article of any of embodiments 1 to 7, wherein the abrasive particles comprise shaped abrasive particles, precisely shaped abrasive particles, abrasive platelets, abrasive rods, shaped agglomerates of abrasive particles, or combinations thereof.

Embodiment 9 is the bonded abrasive article of any of embodiments 1 to 7, wherein the abrasive particles comprise crushed abrasive particles, agglomerates of abrasive particles, or combinations thereof.

Embodiment 10 is the bonded abrasive article of any of embodiments 1 to 9, further comprising a plurality of abrasive particles retained in the binder and oriented randomly with respect to the longitudinal axis of the bonded abrasive article.

Embodiment 11 is the bonded abrasive article of any of embodiments 1 to 10, wherein the abrasive particles comprise two or more adjacent layers of abrasive particles, wherein a first layer comprises a different type of abrasive particles than a second layer.

Embodiment 12 is the bonded abrasive article of any of embodiments 1 to 11, wherein the abrasive particles comprise two substantially parallel planar surfaces.

Embodiment 13 is the bonded abrasive article of any of embodiments 1 to 12, wherein the abrasive article is selected from the group consisting of an abrasive grinding bit, an abrasive segment, an abrasive rim, an abrasive pad, and an abrasive wheel.

Embodiment 14 is the bonded abrasive article of any of embodiments 1 to 13, wherein the abrasive article comprises at least one of an arcuate cooling channel or a tortuous cooling channel.

Embodiment 15 is the bonded abrasive article of any of embodiments 1 to 14, wherein the abrasive particles comprise at least one of diamond particles or cubic boron nitride particles.

Embodiment 16 is the bonded abrasive article of any of embodiments 1 to 15, wherein the abrasive particles comprise at least one of silicon carbide, boron carbide, silicon nitride, metal oxide particles, or metal oxide ceramic particles.

Embodiment 17 is a bonded abrasive article. The bonded abrasive article comprises a plurality of abrasive particles retained in a binder. A first portion of the plurality of abrasive particles are oriented at a predetermined first angle greater than 0 degrees and less than 90 degrees with respect to a longitudinal axis of the bonded abrasive article. A second portion of the plurality of abrasive particles are oriented at a predetermined second angle that is different from the first angle. 50% or more of the abrasive particles of each of the first portion and the second portion are oriented within 15 degrees above or below the first angle and the second angle, respectively, as measured using microscopy image analysis at 10 to 1,000 times magnification.

Embodiment 18 is the bonded abrasive article of embodiment 17, further comprising a third portion of the plurality of abrasive particles oriented at a predetermined third angle that is different from the first angle and the second angle. 50% or more of the abrasive particles of the third portion are oriented within 15 degrees above or below the third angle.

Embodiment 19 is the bonded abrasive article of embodiment 17 or embodiment 18, further comprising a vitreous bond material.

Embodiment 20 is the bonded abrasive article of embodiment 17 or embodiment 18, further comprising a metal bond material.

Embodiment 21 is the bonded abrasive article of embodiment 17 or embodiment 18, further comprising a resin bond material.

Embodiment 22 is the bonded abrasive article of any of embodiments 17 to 21, wherein the first angle is 45 degrees.

Embodiment 23 is the bonded abrasive article of any of embodiments 17 to 21, wherein the second angle is 60 degrees.

Embodiment 24 is the bonded abrasive article of any of embodiments 17 to 23, wherein the abrasive particles comprise an aspect ratio of an average length to an average thickness of 1.5 or greater.

Embodiment 25 is the bonded abrasive article of any of embodiments 17 to 24, wherein the abrasive particles comprise an aspect ratio of the average length to the average thickness of 4.0 or greater.

Embodiment 26 is the bonded abrasive article of any of embodiments 17 to 25, wherein the abrasive particles comprise shaped abrasive particles, precisely shaped abrasive particles, abrasive platelets, abrasive rods, shaped agglomerates of abrasive particles, or combinations thereof.

Embodiment 27 is the bonded abrasive article of any of embodiments 17 to 25, wherein the abrasive particles comprise crushed abrasive particles, agglomerates of abrasive particles, or combinations thereof.

Embodiment 28 is the bonded abrasive article of any of embodiments 17 to 27, further comprising a plurality of abrasive particles retained in the binder and oriented randomly with respect to the longitudinal axis of the bonded abrasive article.

Embodiment 29 is the bonded abrasive article of any of embodiments 17 to 28, wherein the abrasive particles comprise two or more adjacent layers of abrasive particles, wherein a first layer comprises a different type of abrasive particles than a second layer.

Embodiment 30 is the bonded abrasive article of any of embodiments 17 to 29, wherein the abrasive particles comprise two substantially parallel planar surfaces.

Embodiment 31 is the bonded abrasive article of any of embodiments 17 to 30, wherein the abrasive article is selected from the group consisting of an abrasive grinding bit, an abrasive segment, an abrasive rim, an abrasive pad, and an abrasive wheel.

Embodiment 32 is the bonded abrasive article of any of embodiments 17 to 31, wherein the abrasive article comprises at least one of an arcuate cooling channel or a tortuous cooling channel.

Embodiment 33 is the bonded abrasive article of any of embodiments 17 to 32, wherein the abrasive particles comprise at least one of diamond particles or cubic boron nitride particles.

Embodiment 34 is the bonded abrasive article of any of embodiments 17 to 33, wherein the abrasive particles comprise at least one of silicon carbide, boron carbide, silicon nitride, metal oxide particles, or metal oxide ceramic particles.

Embodiment 35 is a method of making a bonded abrasive article. The method comprising sequential steps:
a) a subprocess comprising sequentially:
   i) depositing a layer of loose powder particles in a confined region, wherein the loose powder particles comprise matrix particles and abrasive particles;
   ii) spreading the layer of loose powder particles with a spreading bar or roller to provide a substantially uniform thickness, wherein a gap between the spreading bar or roller and a base plane of the confined region is selected to be shorter than an average length of the abrasive particles; and
   iii) selectively treating an area of the layer of loose powder particles to bond powder particles together;
b) independently carrying out step a) a plurality of times to generate a bonded abrasive article preform comprising the bonded powder particles and remaining loose powder particles, wherein in each step a), the loose powder particles are independently selected;
c) separating substantially all of the remaining loose powder particles from the bonded abrasive article preform; and
d) heating the bonded abrasive article preform to provide the bonded abrasive article comprising the abrasive particles retained in a matrix material.

Embodiment 36 is the method of embodiment 35, wherein a ratio of the length of the gap between the spreading bar or roller and the base plane of the confined region and the average length of the abrasive particle ranges from 2 : 1 to 0.5 : 1, inclusive.

Embodiment 37 is the method of embodiment 35 or embodiment 36, wherein a ratio of the length of the gap between the spreading bar or roller and the base plane of the confined region and the average length of the matrix particle is 5 : 1 or greater.

Embodiment 38 the method of any of embodiments 35 to 37, wherein the matrix particles comprise vitreous bond precursor particles, metal bond precursor particles, resin bond precursor particles, organic compound particles, or combinations thereof.

Embodiment 39 is the method of any of embodiments 35 to 38, wherein the selectively treating an area of the layer of loose powder particles to bond powder particles together comprises binder jetting, organic compound binding, applying heat via conduction or irradiation, or combinations thereof.

Embodiment 40 is the method of embodiment 38 or embodiment 39, wherein the organic compound particles have a melting point between 50 degrees Celsius and 250 degrees Celsius, inclusive.

Embodiment 41 is the method of any of embodiments 38 to 40, wherein the organic compound particles are selected from waxes, sugars, dextrins, thermoplastics having a melting point of no greater than 250 degrees Celsius, acrylates, methacrylates, and combinations thereof.

Embodiment 42 is the method of any of embodiments 38 to 41, wherein the organic compound particles are selected from waxes, acrylates, methacrylates, polyethyleneterephthalate (PET), polylactic acid (PLA), and combinations thereof.

Embodiment 43 is the method of any of embodiments 35 to 42, wherein the abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using microscopy image analysis at 10 to 1,000 times magnification.

Embodiment 44 is the method of any of embodiments 35 to 43, further comprising changing the gap between the spreading bar or roller and a base plane of the confined region from one sequential spreading step to a subsequent sequential spreading step.

Embodiment 45 is the method of any of embodiments 35 to 44, wherein the angle is 45 degrees.

Embodiment 46 is the method of any of embodiments 35 to 45, wherein the abrasive particles comprise an aspect ratio of an average length to an average thickness of 1.5 or greater.

Embodiment 47 is the method of any of embodiments 35 to 46, wherein the abrasive particles comprise an aspect ratio of the average length to the average thickness of 10.0 or greater.

Embodiment 48 is the method of any of embodiments 35 to 47, wherein the abrasive particles comprise shaped abrasive particles, precisely shaped abrasive particles, abrasive platelets, abrasive rods, shaped agglomerates of abrasive particles, or combinations thereof.

Embodiment 49 is the method of any of embodiments 35 to 48, wherein the abrasive particles comprise crushed abrasive particles, agglomerates of abrasive particles, or combinations thereof.

Embodiment 50 is the method of any of embodiments 35 to 49, wherein the bonded abrasive article further comprises a plurality of abrasive particles retained in the binder and oriented randomly with respect to the longitudinal axis of the bonded abrasive article.

Embodiment 51 is the method of any of embodiments 35 to 50, wherein the abrasive particles comprise two or more adjacent layers of abrasive particles, wherein a first layer comprises a different type of abrasive particles than a second layer.

Embodiment 52 is the method of any of embodiments 35 to 51, wherein the abrasive particles comprise two substantially parallel planar surfaces.

Embodiment 53 is the method of any of embodiments 35 to 52, wherein the abrasive article is selected from the group consisting of an abrasive grinding bit, an abrasive segment, an abrasive rim, an abrasive pad, and an abrasive wheel.

Embodiment 54 is the method of any of embodiments 35 to 53, wherein the abrasive article comprises at least one of an arcuate cooling channel or a tortuous cooling channel.

Embodiment *55* is the method of any of embodiments 35 to 54, wherein the abrasive particles comprise at least one of diamond particles or cubic boron nitride particles.

Embodiment 56 is the method of any of embodiments 35 to 55, wherein the abrasive particles comprise at least one of silicon carbide, boron carbide, silicon nitride, metal oxide particles, or metal oxide ceramic particles.

Embodiment 57 is a non-transitory machine readable medium. The non-transitory machine readable medium has data representing a three-dimensional model of a bonded abrasive article, when accessed by one or more processors interfacing with a 3D printer, causes the 3D printer to create a bonded abrasive article preform of the bonded abrasive article. The bonded abrasive article preform comprises abrasive particles retained in a binder. The abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using microscopy image analysis at 10 to 1,000 times magnification.

Embodiment 58 is a non-transitory machine readable medium. The non-transitory machine readable medium has data representing a three-dimensional model of a bonded abrasive article, when accessed by one or more processors interfacing with a 3D printer, causes the 3D printer to create a bonded abrasive article preform of the bonded abrasive article. The bonded abrasive article preform comprises a plurality of abrasive particles retained in a binder. A first portion of the plurality of abrasive particles are oriented at a predetermined first angle greater than 0 degrees and less than 90 degrees with respect to a longitudinal axis of the bonded abrasive article preform. A second portion of the plurality of abrasive particles are oriented at a predetermined second angle that is different from the first angle. 50% or more of the abrasive particles of each of the first portion and the second portion are oriented within 15 degrees above or below the first angle and the second angle, respectively, as measured using microscopy image analysis at 10 to 1,000 times magnification.

Embodiment 59 is a method. The method includes retrieving, from a non-transitory machine readable medium, data representing a 3D model of a bonded abrasive article; executing, by one or more processors, a 3D printing application interfacing with a manufacturing device using the data; and generating, by the manufacturing device, a physical object of a bonded abrasive article preform of the bonded abrasive article. The bonded abrasive article preform comprises abrasive particles retained in a binder. The abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using microscopy image analysis at 10 to 1,000 times magnification.

Embodiment 60 is a method. The method includes retrieving, from a non-transitory machine readable medium, data representing a 3D model of a bonded abrasive article; executing, by one or more processors, a 3D printing application interfacing with a manufacturing device using the data; and generating, by the manufacturing device, a physical object of a bonded abrasive article preform of the bonded abrasive article. The bonded abrasive article preform comprises a plurality of abrasive particles retained in a binder. A first portion of the plurality of abrasive particles are oriented at a predetermined first angle greater than 0 degrees and less than 90 degrees with respect to a longitudinal axis of the bonded abrasive article preform. A second portion of the plurality of abrasive particles are oriented at a predetermined second angle that is different from the first angle. 50% or more of the abrasive particles of each of the first portion and the second portion are oriented within 15 degrees above or below the first angle and the second angle, respectively, as measured using microscopy image analysis at 10 to 1,000 times magnification.

Embodiment 61 is an article generated using the method of embodiment 59 or embodiment 60.

Embodiment 62 is a method. The method includes receiving, by a manufacturing device having one or more processors, a digital object comprising data specifying a plurality of layers of a bonded abrasive article; and generating, with the manufacturing device by an additive manufacturing process, a bonded abrasive article preform of the bonded abrasive article based on the digital object. The bonded abrasive article preform comprises abrasive particles retained in a binder. The abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using microscopy image analysis at 10 to 1,000 times magnification.

Embodiment 63 is a method. The method includes receiving, by a manufacturing device having one or more processors, a digital object comprising data specifying a plurality of layers of a bonded abrasive article; and generating, with the manufacturing device by an additive manufacturing process, a bonded abrasive article preform of the bonded abrasive article based on the digital object. The bonded abrasive article preform comprises a plurality of abrasive particles retained in a binder. A first portion of the plurality of abrasive particles are oriented at a predetermined first angle greater than 0 degrees and less than 90 degrees with respect to a longitudinal axis of the bonded abrasive article preform. A second portion of the plurality of abrasive particles are oriented at a predetermined second angle that is different from the first angle. 50% or more of the abrasive particles of each of the first portion and the second portion are oriented within 15 degrees above or below the first angle and the second angle, respectively, as measured using microscopy image analysis at 10 to 1,000 times magnification.

Embodiment 64 is the method of embodiment 62 or embodiment 63, wherein the additive manufacturing equipment performs the following sequential steps to form the bonded abrasive article preform:
a) a subprocess comprising sequentially:
   i) depositing a layer of loose powder particles in a confined region, wherein the loose powder particles comprise matrix particles and abrasive particles;
   ii) spreading the layer of loose powder particles with a spreading bar or roller to provide a substantially uniform thickness, wherein a gap between the spreading bar or roller and a base plane of the confined region is selected to be shorter than an average length of the abrasive particles; and
   iii) selectively treating an area of the layer of loose powder particles to bond powder particles together; and
b) independently carrying out step a) a plurality of times to generate a bonded abrasive article preform comprising the bonded powder particles and remaining loose powder particles, wherein in each step a), the loose powder particles are independently selected.

Embodiment 65 is the method of embodiment 64, further including c) separating substantially all of the remaining loose powder particles from the bonded abrasive article preform; and d) heating the bonded abrasive article preform to provide the bonded abrasive article comprising the abrasive particles retained in a matrix material.

Embodiment 66 is a system. The system includes a display that displays a 3D model of a bonded abrasive article; and one or more processors that, in response to the 3D model selected by a user, cause a 3D printer to create a physical object of a bonded abrasive article preform of the bonded abrasive article. The bonded abrasive article preform comprises abrasive particles retained in a binder. The abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using microscopy image analysis at 10 to 1,000 times magnification.

Embodiment 67 is a system. The system includes a display that displays a 3D model of a bonded abrasive article; and one or more processors that, in response to the 3D model selected by a user, cause a 3D printer to create a physical object of a bonded abrasive article preform of the bonded abrasive article. The bonded abrasive article preform comprises a plurality of abrasive particles retained in a binder. A first portion of the plurality of abrasive particles are oriented at a predetermined first angle greater than 0 degrees and less than 90 degrees with respect to a longitudinal axis of the bonded abrasive article preform. A second portion of the plurality of abrasive particles are oriented at a predetermined second angle that is different from the first angle. 50% or more of the abrasive particles of each of the first portion and the second portion are oriented within 15 degrees above or below the first angle and the second angle, respectively, as measured using microscopy image analysis at 10 to 1,000 times magnification.

### Examples

Unless otherwise noted, all parts, percentages, ratios, etc. in the Examples and the rest of the specification are by weight.

**TABLE 1**

| ABBREVIATION | DESCRIPTION |
|---|---|
| Abrasive particles | Triangular prism shaped alumina abrasive particles having a length of 200 micrometers and thickness of 70 micrometers, obtained from 3M Company (St. Paul, MN) |
| Glass particles | SP1086 glass powder, type v3128 glass frit, obtained from Specialty Glass Inc. (Oldsmar, FL) |
| Binder solution | ExOne PM-B-SR1-04, ether solvent-based polymer binder, obtained from ExOne (North Huntington, PA) |

### Example 1

A loose powder mixture was prepared by weight of: 75% triangular prism shaped abrasive grains with nominal dimension of 200-250 micrometers and a thickness of 70 micrometers mixed with 25% glass particles in a plastic container, and tumbled at least for one hour. The mixture was printed in the ExOne M-lab additive manufacturing printer. The height of each layer was 200 microns, the spreader speed was 5 millimeters per second, the printing saturation for the binder jetting was set to the nominal 100% level using the printer software, and the drying time was set at 120 seconds. The binder was ExOne PM-B-SR1-04. The resulting green parts were baked for 2 hours in an oven set at 195 degrees Celsius in ambient atmosphere, and then the excess loose powder was removed. Next, the parts were heated at 400 degrees Celsius for 2 hours to burn off the organic binder material and then sintered at 720 degrees Celsius for 2 hours. With this method three orientations were selected to make vitrified bonded abrasive discs. The resulting surfaces are shown in FIGS. 5B, 5D, and 6B.

### Example 2

Abrading tests were conducted by attaching each of the discs of Example 1 to a Mini Orbital Sander obtained from 3M Company (Maplewood, MN). The sander rotational speed was 8000 rpm. The abrasion performance was tested on 1018 Carbon steel obtained from a steel mill (e.g., commercially available from any steel mill). There was a significant performance difference depending on the orientation of the build, as shown in FIG. 8, as a result of the orientation of the abrasive particles. In this figure, V3128 45 refers to the build that was at 45 degrees while V3128 0 and V3128 90 refer to axial and radial builds, respectively. Also, there were some porosity differences between these samples.

There was an unexpected result regarding orientation. More particularly, V3128 90 was expected to perform as well as V3128 45, but surprisingly, the disc having particles oriented at a 45 degree angle (with respect to the longitudinal axis of the disc) outperformed the disc having particles oriented at a 90 degree angle (with respect to the longitudinal axis of the disc). This was unexpected at least because the triangular prism shaped abrasive particles are configured to fracture when used at a 90 degree angle to provide fresh abrasive surfaces, instead of simply wearing down during use.

### Example 3

A loose powder mixture was prepared as described in Example 1. The binder solution was ExOne PM-B-SR1-04. The mixture was printed in the ExOne M-lab additive manufacturing printer. The height of each layer was about 200 microns, the spreader speed was 5 millimeters per second, the printing saturation for the binder jetting was set to the nominal 100% level using the printer software, and the drying time was set at 120 seconds. Prior to the spreading of each layer of loose powder, the plate supporting the powder bed was incrementally tilted with respect to the roller direction of travel such that a total tilting angle of about 24 degrees was achieved from the first layer to the last and 42^{th} layer of the part. The resulting green parts were baked for 4 hours in an oven set at 195 degrees Celsius in an ambient atmosphere, and then the excess loose powder was removed. An optical microscope image of a resulting abrasive article preform is shown in FIG. 4B.
In the following additional exemplary embodiments are described:
A. A bonded abrasive article comprising abrasive particles retained in a binder, wherein the abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using image analysis at 10 to 1,000 times magnification.
B. The bonded abrasive article of Embodiment A, further comprising a vitreous bond material.
C. The bonded abrasive article of Embodiment A, further comprising a metal bond material.
D. The bonded abrasive article of Embodiment A, further comprising a resin bond material.
E. The bonded abrasive article of any of Embodiments A to D, wherein the angle is 45 degrees.
F. The bonded abrasive article of any of Embodiments 1 to E, wherein the abrasive particles comprise an aspect ratio of an average length to an average thickness of 1.5 or greater.
G. The bonded abrasive article of any of Embodiments 1 to F, wherein the abrasive particles comprise an aspect ratio of the average length to the average thickness of 4.0 or greater.
H. The bonded abrasive article of any of Embodiments 1 to G, wherein the abrasive particles comprise shaped abrasive particles, precisely shaped abrasive particles, abrasive platelets, abrasive rods, shaped agglomerates of abrasive particles, or combinations thereof.
I. The bonded abrasive article of any of Embodiments 1 to G, wherein the abrasive particles comprise crushed abrasive particles, agglomerates of abrasive particles, or combinations thereof.
J. The bonded abrasive article of any of Embodiments 1 to I, further comprising a plurality of abrasive particles retained in the binder and oriented randomly with respect to the longitudinal axis of the bonded abrasive article.
K. The bonded abrasive article of any of Embodiments 1 to J, wherein the abrasive article is selected from the group consisting of an abrasive grinding bit, an abrasive segment, an abrasive rim, an abrasive pad, and an abrasive wheel.
L. A bonded abrasive article comprising a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.
M. A method of making a bonded abrasive article, the method comprising sequential steps:
   a) a subprocess comprising sequentially:
      i) depositing a layer of loose powder particles in a confined region, wherein the loose powder particles comprise matrix particles and abrasive particles;
      ii) spreading the layer of loose powder particles with a spreading bar or roller to provide a substantially uniform thickness, wherein a gap between the spreading bar or roller and a base plane of the confined region is selected to be shorter than an average length of the abrasive particles; and
      iii) selectively treating an area of the layer of loose powder particles to bond powder particles together;
   b) independently carrying out step a) a plurality of times to generate a bonded abrasive article preform comprising the bonded powder particles and remaining loose powder particles, wherein in each step a), the loose powder particles are independently selected;
   c) separating substantially all of the remaining loose powder particles from the bonded abrasive article preform; and
   d) heating the bonded abrasive article preform to provide the bonded abrasive article comprising the abrasive particles retained in a matrix material.
N. The method of Embodiment M, wherein a ratio of the length of the gap between the spreading bar or roller and the base plane of the confined region and the average length of the abrasive particle ranges from 2 : 1 to 0.5 : 1, inclusive.
O. The method of Embodiment M or Embodiment N, wherein a ratio of the length of the gap between the spreading bar or roller and the base plane of the confined region and the average length of the matrix particle is 5 : 1 or greater.
P. The method of any of Embodiments L to O, wherein the abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using microscopy image analysis at 10 to 1,000 times magnification.
Q. A non-transitory machine readable medium having data representing a three-dimensional model of a bonded abrasive article, when accessed by one or more processors interfacing with a 3D printer, causes the 3D printer to create a bonded abrasive article preform of the bonded abrasive article, the bonded abrasive article preform comprising:
   a) abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification; or
   b) a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.
R. A method comprising:
   retrieving, from a non-transitory machine readable medium, data representing a 3D model of a bonded abrasive article;
   executing, by one or more processors, a 3D printing application interfacing with a manufacturing device using the data; and
   generating, by the manufacturing device, a physical object of a bonded abrasive article preform of the bonded abrasive article, the bonded abrasive article preform comprising:
      a) abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification; or
      b) a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.
S. A method comprising:
   receiving, by a manufacturing device having one or more processors, a digital object comprising data specifying a plurality of layers of a bonded abrasive article; and
   generating, with the manufacturing device by an additive manufacturing process, a bonded abrasive article preform of the bonded abrasive article based on the digital object, the bonded abrasive article preform comprising:
      a) abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification; or
      b) a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.
T. The method of Embodiment S, wherein the additive manufacturing equipment performs the following sequential steps to form the bonded abrasive article preform:
   a) a subprocess comprising sequentially:
      i) depositing a layer of loose powder particles in a confined region, wherein the loose powder particles comprise matrix particles and abrasive particles;
      ii) spreading the layer of loose powder particles with a spreading bar or roller to provide a substantially uniform thickness, wherein a gap between the spreading bar or roller and a base plane of the confined region is selected to be shorter than an average length of the abrasive particles; and
      iii) selectively treating an area of the layer of loose powder particles to bond powder particles together; and
   b) independently carrying out step a) a plurality of times to generate a bonded abrasive article preform comprising the bonded powder particles and remaining loose powder particles, wherein in each step a), the loose powder particles are independently selected.
U. The method of Embodiment T, further comprising:
   c) separating substantially all of the remaining loose powder particles from the bonded abrasive article preform; and
   d) heating the bonded abrasive article preform to provide the bonded abrasive article comprising the abrasive particles retained in a matrix material.
V. A system comprising:
   a display that displays a 3D model of a bonded abrasive article; and
   one or more processors that, in response to the 3D model selected by a user, cause a 3D printer to create a physical object of a bonded abrasive article preform of the bonded abrasive article, the bonded abrasive article preform comprising:
      a) abrasive particles retained in a binder, wherein the abrasive particles are oriented at a predetermined angle greater than 0 degrees and less than 90 degrees with respect to a longitudinal axis of the bonded abrasive article preform, wherein 50% or more of the abrasive particles are oriented within 15 degrees above or below the angle, as measured using image analysis at 10 to 1,000 times magnification; or
      b) a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article preform and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.

## Claims

1. A bonded abrasive article comprising abrasive particles retained in a binder, wherein the abrasive particles are oriented at a predetermined angle greater than 0 degrees and less than 90 degrees with respect to a longitudinal axis of the bonded abrasive article, wherein 50% or more of the abrasive particles are oriented within 15 degrees above or below the angle, as measured using image analysis at 10 to 1,000 times magnification.

2. The bonded abrasive article of claim **1,** further comprising a vitreous bond material.

3. The bonded abrasive article of claim **1,** further comprising a metal bond material.

4. The bonded abrasive article of claim 1, further comprising a resin bond material.

5. The bonded abrasive article of any of claims 1 to 4, wherein the angle is 45 degrees.

6. The bonded abrasive article of any of claims 1 to 5, wherein the abrasive particles comprise an aspect ratio of an average length to an average thickness of 1.5 or greater.

7. The bonded abrasive article of any of claims 1 to 6, wherein the abrasive particles comprise an aspect ratio of the average length to the average thickness of 4.0 or greater.

8. The bonded abrasive article of any of claims 1 to 7, wherein the abrasive particles comprise shaped abrasive particles, precisely shaped abrasive particles, abrasive platelets, abrasive rods, shaped agglomerates of abrasive particles, or combinations thereof.

9. The bonded abrasive article of any of claims 1 to 7, wherein the abrasive particles comprise crushed abrasive particles, agglomerates of abrasive particles, or combinations thereof.

10. The bonded abrasive article of any of claims 1 to 9, further comprising a plurality of abrasive particles retained in the binder and oriented randomly with respect to the longitudinal axis of the bonded abrasive article.

11. The bonded abrasive article of any of claims 1 to 10, wherein the abrasive article is selected from the group consisting of an abrasive grinding bit, an abrasive segment, an abrasive rim, an abrasive pad, and an abrasive wheel.

12. A bonded abrasive article comprising a plurality of abrasive particles retained in a binder, wherein a first portion of the plurality of abrasive particles are oriented at a predetermined first angle greater than 0 degrees and less than 90 degrees with respect to a longitudinal axis of the bonded abrasive article and a second portion of the plurality of abrasive particles are oriented at a predetermined second angle that is different from the first angle, wherein 50% or more of the abrasive particles of each of the first portion and the second portion are oriented within 15 degrees above or below the first angle and the second angle, respectively, as measured using microscopy image analysis at 10 to 1,000 times magnification.
